# EUROPEAN PATENT SPECIFICATION

(11) **EP 1 144 500 B1**
(45) Date of publication and mention of the grant of the patent: **30.06.2004**
(21) Application number: 99965933.7
(22) Date of filing: 30.11.1999
(51) Int. Cl.: C08K 9/04, C08J 3/20, C08L 77/00

(54) **PROCESS FOR PREPARING AN EXFOLIATED, HIGH I.V. POLYMER NANOCOMPOSITE WITH AN OLIGOMER RESIN PRECURSOR AND AN ARTICLE PRODUCED THEREFROM**
VERFAHREN ZUR HERSTELLUNG EINES BLÄTTRIGEN POLYMER NANOVERBUNDSTOFFES MIT HOHEM I.V. MIT EINEM OLIGOMEREN HARZVORLÄUFER UND DARAUS HERGESTELLTE GEGENSTÄNDE
PROCESSUS DE PREPARATION D'UN NANOCOMPOSITE POLYMERE EXPANSE A VISCOSITE INTERNE ELEVEE AVEC UN PRECURSEUR DE RESINE OLIGOMERE ET ARTICLE FABRIQUE A PARTIR DE CE MATERIAU

(30) Priority: 07.12.1998 US 111202 P; 15.07.1999 US 354205
(43) Date of publication of application: 17.10.2001
(73) Proprietor: University of South Carolina Research Foundation, Columbia, South Carolina 29208 (US)
(72) Inventor: GILMER, John, Walker, Kingsport, TN 37660-4754 (US); MATAYABAS, James, Christopher, Jr., Chandler, Arizona 85224-7216 (US); CONNELL, Gary, Wayne, Church Hill, TN 37642-3101 (US); OWENS, Jeffrey, Todd, Kingsport, TN 37660-7581 (US); TURNER, Sam, Richard, Kingsport, TN 37660-5836 (US); PINER, Rodney, Layne, Kingsport, TN 37664 (US)
(74) Representative: Brown, Fraser Gregory James
(86) International application number: PCT/US1999/028220
(87) International publication number: WO 2000/034377

(56) References cited:
- US-A- 4 739 007
- US-A- 4 742 098
- US-A- 4 889 885

## Description

### Related Application

This application claims priority to provisional patent application Serial No. 60/111,202 filed December 7, 1998.

### Background of the Invention

### 1. Field of the Invention

This invention relates generally to a nanocomposite prepared from an oligomeric resin-platelet particle precursor composite, a process for preparing a high inherent viscosity (I.V.) polymer nanocomposite material comprising at least one polymer resin and platelet particles uniformly dispersed therein, the nanocomposite material produced by the process, and products produced from the nanocomposite material.

### 2. General Background and Description of Related Art

Thermoplastic materials are being increasingly used in the packaging of beverages and perishable foods. Plastics are often the material of choice for food and beverage packaging because of their clarity, flexibility, toughness, high gas barrier, light weight, processability and high gloss.

Multilayer materials for packaging are also known for film, bottles, and other containers. Multilayer injection molded preforms described, for example, in European Patent Application 0 278 403 A2, contain an outer thermoplastic layer to impart excellent overall properties to the material and an inner layer of thermoplastic resin possessing excellent gas-barrier properties. Molded containers produced from these multilayer preforms have potential advantages in regards to handling, safety, and the cost of production. However, processing multilayer containers usually involves additional and time consuming steps.

Polyamides and poly(ethylene-co-vinyl alcohol) provide high barrier to prevent the diffusion of many gases such as oxygen and carbon dioxide. In general, however, high barrier materials also command a higher price, thus prohibiting their extensive use for oxygen sensitive foods and beverages. For example, although the oxygen barrier of the polyamide poly(m-xylyladipamide) (MXD6) is approximately 20 times greater than that of poly(ethylene terephthalate) (PET), MXD6 and PEN materials are not nearly so widely used as PET, even with oxygen sensitive applications such as beer containers, which demand higher barrier.

### Polyester Materials

Useful polyesters have high inherent viscosities (I.V.) which allow the polyester to be formed into a parison and subsequently molded into a container. However, because of the limited barrier properties with regard to oxygen, carbon dioxide and the like, PET containers are not generally used for products requiring long shelf life or that have high sensitivity to spoilage by oxygen. For example, oxygen transmission into PET bottles that contain beer, wine and certain food products cause these products to spoil.

The preparation of polymer-platelet particle composites containing, for example, nylon-6 and alkyl ammonium treated montmorillonite have been disclosed. Most prior attempts to improve gas barrier properties used polyamides due to their hydrogen bonding character and corresponding synergistic interaction with the negatively charged clay. However, the application of this technology to polyesters, particularly to improve gas barrier properties, has been limited due to the inability to achieve the required level of dispersion of the clay particles.

Processes to prepare polymer composites by incorporating platelet particles during polymer synthesis are limited to low I.V.'s and to low loadings of platelet particles due to the increasing low shear melt viscosity with the increased loading of delaminated platelet particles. For example, JP Kokai patent no. 9-176461 discloses the preparation of polyester composites containing unmodified sodium montmorillonite and bottles prepared from these polyester composites. Example 11 of U.S. Patent 4,889,885 describes the polycondensation of dimethyl terephthalate and ethylene glycol in the presence of 33 weight percent of a montmorillonite clay in water (for 6.2 final weight percent of clay in the polyester resin). However, the foregoing references produce materials comprising very large tactoids and little, if any dispersion of individual platelet particles. Nor do the references disclose polymer-platelet compositions having other specific properties such as oxygen permeability.

Extruders are well suited for mixing materials with high low-shear melt viscosity that shear thin at high shear rates. Extrusion compounding approaches have been shown to give intercalation of high molecular weight, melt processable polymers between the platelets of layered clay materials; however, the preparation of polyester-platelet composites comprising mostly delaminated, individual platelet particles has not been demonstrated by a compounding process.

WO 93/04117 and WO 93/04118 disclose extrusion blending of up to 60 weight percent of intercalated clay materials with a wide range of polymers including polyamides, polyesters, polyurethanes, polycarbonates, polyolefins, vinyl polymers, thermosetting resins and the like. Although the use of polyesters are disclosed as useful polymers and an example of a PET/organoclay nanocomposite is provided in WO 93/04118, compositions prepared as described exhibit insufficient clay dispersion and do not lead to improved barrier due to lack of separation.

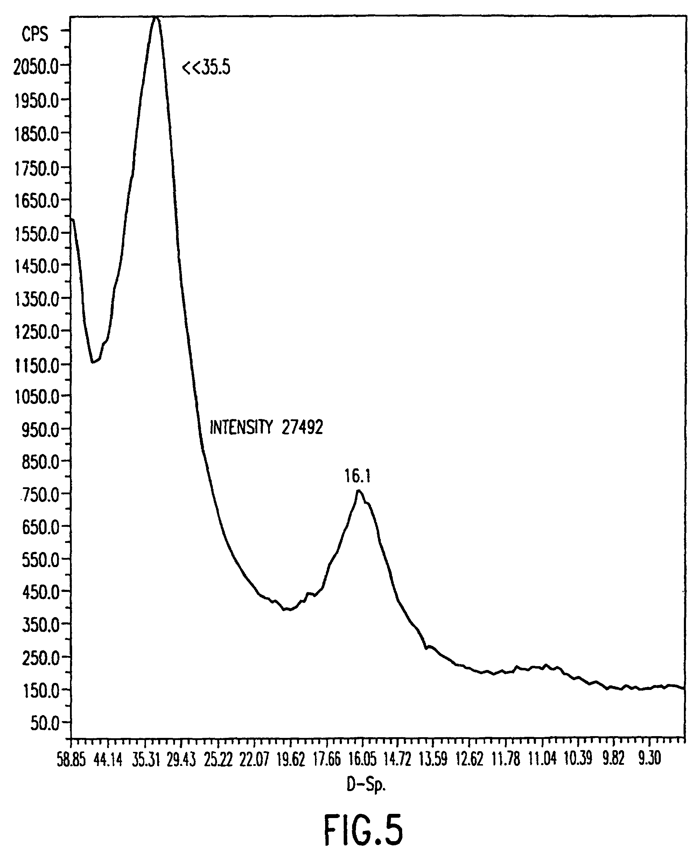

U.S. Patents 5,552,469 and 5,578,672 describe the preparation of intercalates derived from certain clays and water-soluble polymers such as polylvinyl pyrrolidone, polyvinyl alcohol, and polyacrylic acid. The specification describes a wide range of thermoplastic resins including polyesters and rubbers that can be used in blends with these intercalates. The compositions prepared as described exhibit insufficient clay dispersion and do not lead to improved barrier due to lack of separation. The inability to contribute to gas barrier would not be predicted based on the disappearance of the d(001) montmorillonite X-ray diffraction pattern as observed in Figure 5 of U.S. Patent 5,578,672.

### Polyamide Materials

Regarding polyamide materials, the principle of utilizing a platelet filler, e.g., a layered clay, to enhance properties is well established. U.S. Patent 4,739,007 describes the use of a composite material comprised of a polyamide matrix and well-dispersed silicate layers exhibiting high mechanical strength and excellent high temperature properties. Additional publications describing polymer nanocomposites comprising a polyamide matrix and dispersed layers of silicate include U.S. Patent 4,810,734; German Patent 3808623; J. Inclusion Phenomena 5, (1987), 473-485; Clay Minerals, 23, (1988) 27; Polymer Preprints, 32, (April 1991), 65-66; and Polymer Preprints, 28, (August 1987), 447 - 448.

Therefore, previous patents and applications have claimed to produce by extrusion compounding polymeric (polyester and polyamide) composites comprised of intercalated or exfoliated platelet particles, as indicated either by large basal spacing values or the lack of a detectable basal spacing value by X-ray. However, the polymer/platelet particle composites of the prior art are believed to be dispersions of aggregates with large thickness, typically greater than about 20 nm. While the aggregates were well spaced, very few individual platelets and tactoids or particles with thickness less than about 10 nm could be found. Without achieving a good dispersion and small particle size, improved gas barrier properties are difficult to achieve.

Thus, there remains a need in the art for a process capable of introducing high loadings of substantially separated platelet particles to polymers, including polyesters and polyamides, to produce a nanocomposite having a high I.V., improved barrier properties and good thermal stability.

### Summary of the Invention

As embodied and broadly described herein, this invention, in one embodiment relates to an exfoliated, high I.V. polymer-platelet particle nanocomposite comprising: a high molecular weight matrix polyamide prepared by condensation polymerization of diacids and diamines, and platelet particles exfoliated in the matrix polymer, wherein the platelet particles are dispersed in a matrix polymer-compatible oligomeric resin and wherein the platelet particle-oligomer resin dispersion is incorporated into the matrix polymer.

In another embodiment, this invention relates to a process for preparing an exfoliated, high I.V. polymer-platelet particle nanocomposite comprising the steps of: (i) melt mixing platelet particles with a matrix polymer-compatible oligomeric resin to form an oligomeric resin-platelet particle composite, and (ii) mixing the oligomeric resin-platelet particle composite with a high molecular weight matrix polyamide prepared by condensation polymerization of diacids and diamines, thereby increasing the molecular weight of the oligomeric resin-platelet particle composite and producing an exfoliated, high I.V. polymer nanocomposite material.

In another embodiment, this invention relates to a process for preparing an exfoliated, high I.V. polymer-platelet particle nanocomposite comprising: melt mixing platelet particles, a matrix polymer-compatible oligomeric resin, and a high molecular weight matrix polyamide prepared by condensation polymerization of diacids and diamines, thereby, increasing the molecular weight of the mixture and producing an exfoliated, high I.V. polymer nanocomposite material.

In another embodiment, this invention relates to a process for preparing an exfoliated, high I.V. polymer-platelet particle nanocomposite comprising the steps of: (i) melt mixing platelet particles with an oligomeric polyamide resin prepared by condensation polymerization of diacids and diamines to form an oligomeric polyamide resin-platelet particle composite, and (ii) increasing the molecular weight of the oligomeric polyamide resin-platelet particle composite by reactive chain extension of the oligomeric polyamide resin to produce an exfoliated, high I.V. nanocomposite material.

In yet another embodiment, this invention relates to a process for preparing an exfoliated, high I.V. polymer-platelet particle nanocomposite comprising the steps of: (i) contacting a clay with an organic cation to form an organoclay comprising platelet particles, (ii) melt mixing the organoclay with a matrix polymer-compatible oligomeric resin to form an oligomeric resin-platelet particle composite, and (iii) mixing the oligomeric resin-platelet particle composite with a high molecular weight matrix polyamide prepared by condensation polymerization of diacids and diamines, thereby increasing the molecular weight of the oligomeric resin-platelet particle composite and producing an exfoliated, high I.V. polymer nanocomposite material.

Additional advantages of the invention will be set forth in part in the detailed description, including the figures, which follows, and in part will be obvious from the description, or may be learned by practice of the invention. The advantages of the invention will be realized and attained by means of the elements and combinations particularly pointed out in the appended claims. It is to be understood that both the foregoing general description and the following detailed description are exemplary and explanatory of preferred embodiments of the invention, and are not restrictive of the invention, as claimed.

### Brief Description of the Figures

Figure 1 is a wide angle X-ray diffraction pattern taken using a Cu K X-ray source for the nanocomposite material of Example 17.
Figure 2 is a wide angle X-ray diffraction pattern taken using a Cu K X-ray source for the nanocomposite material of Example 18.
Figure 3 is a wide angle X-ray diffraction pattern taken using a Cu K X-ray source for the nanocomposite material of Example 19.
Figure 4 is a wide angle X-ray diffraction pattern taken using a Cu K X-ray source for the nanocomposite material of Comparative Example 2.
Figure 5 is a wide angle X-ray diffraction pattern taken using a Cu K X-ray source for the nanocomposite material of Comparative Example 3.
Figure 6 is a wide angle X-ray diffraction pattern taken using a Cu K X-ray source for the nanocomposite material of Comparative Example 4.

### Detailed Description of the Invention

The present invention may be understood more readily by reference to the following detailed description of the invention, including the appended figures referred to herein, and the examples provided therein. It is to be understood that this invention is not limited to the specific processes and conditions described, as specific processes and/or process conditions for processing plastic articles as such may, of course, vary. It is also to be understood that the terminology used herein is for the purpose of describing particular embodiments only and is not intended to be limiting.

### Definitions

It must also be noted that, as used in the specification and the appended claims, the singular forms "a," "an" and "the" include plural referents unless the context clearly dictates otherwise. For example, reference to processing or forming an "article," "container" or "bottle" from the process or nanocomposite of this invention is intended to include the processing of a plurality of articles, containers or bottles.

Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

Whenever used in this specification, the terms set forth shall have the following meanings:
"Layered clay material," "Layered clay," or "Layered material" shall mean any organic or inorganic material or mixtures thereof, such as a smectite clay mineral, which is in the form of a plurality of adjacent, bound layers. The layered clay comprises platelet particles and is typically swellable.
"Platelets," "platelet particles" or "particles" shall mean individual or aggregate unbound layers of the layered material. These layers may be in the form of individual platelet particles, ordered or disordered small aggregates of platelet particles (tactoids), and small aggregates of tactoids.
"Dispersion" or "dispersed" is a general term that refers to a variety of levels or degrees of separation of the platelet particles. The higher levels of dispersion include, but are not limited to, "intercalated" and "exfoliated."
"Intercalated" or "intercalate" shall mean a layered clay material that includes oligomer and/or polymer molecules disposed between adjacent platelet particles or tactoids of the layered material to increase the interlayer spacing between the adjacent platelets and tactoids.
"Exfoliate" or "exfoliated" shall mean platelets dispersed mostly in an individual state throughout a carrier material, such as a matrix polymer. Typically, "exfoliated" is used to denote the highest degree of separation of platelet particles.
"Exfoliation" shall mean a process for forming an exfoliate from an intercalated or otherwise less dispersed state of separation.
"Nanocomposite" shall mean a polymer or copolymer having dispersed therein a plurality of individual platelets obtained from an exfoliated, layered materi al.
"Matrix polymer" shall mean a thermoplastic or thermosetting polymer in which the platelet particles are exfoliated to form a nanocomposite.

### Description of the Embodiments

This invention relates generally to a process for preparing a high I.V. polymer nanocomposite material comprising at least one polymer resin and platelet particles uniformly dispersed therein, the nanocomposite material produced by the process, products produced from the nanocomposite material, and a nanocomposite prepared from an oligomeric resin-platelet particle precursor composite. The nanocomposite material exhibits improved gas barrier properties when formed into an article.

More particularly, this invention relates to a process comprising the steps of (1) preparing an oligomeric resin-platelet particle composite by melt-mixing platelet particles and an oligomeric resin and (2) preparing a high I.V. polymer-platelet nanocomposite material.

The molecular weight of the polymer material may be increased by any of a number of known approaches or by any combination of these approaches, e.g., chain extension, reactive extrusion, extrusion let-down, solid state polymerization or annealing, annealing under a flow of inert gas, vacuum annealing, let-down in a melt reactor, etc. Polymer nanocomposites produced according to the present invention display a gas permeability which is at least 15 percent lower than that of the unmodified polymer.

The prior art has defined the degree of separation of the platelet particles based on peak intensity and basal spacing value, or lack of predominant basal spacing, as determined by X-ray analyses of polymer-platelet composites. Even though X-ray analysis alone often does not unambiguously predict whether or not the platelet particles are individually dispersed in the polymer, it can often allow quantification of the level of dispersion achieved. As such, X-ray analysis only provides information related to the well ordered aggregates, which are only a small portion of the platelet particles present. Moreover, in polymer nanocomposites, X-ray analysis alone does not accurately predict the dispersion of the platelet particles in neither the polyester nor the resultant gas barrier improvement. TEM images of polymer-platelet composites show that platelet particles which are incorporated into at least one polymer exist in a variety of forms, including, but not limited to individual platelets (the exfoliated state), disordered agglomerates of platelets, well ordered or stacked aggregates of platelets (tactoids), swollen aggregates of stacked platelets (intercalated tactoids), and aggregates of tactoids.

Without being bound by any particular theory, it is believed that the degree of improved gas barrier (permeability) depends upon the embodiment ratio of the resulting particle platelets and aggregates, the degree to which they are dispersed or uniformly distributed, and the degree to which they are ordered perpendicular to the flux of the permeant.

To obtain the improvements in gas permeability and the enhanced melt viscosity according to the present invention, it is preferable that the platelet particles representative of the bulk of the composite be exfoliated, and preferably be highly exfoliated, in the matrix polymer such that the majority, preferably at least about 75 percent and perhaps as much as at least about 90 percent or more of the platelet particles, be dispersed in the form of individual platelets and aggregates having a thickness in the shortest dimension of less than about 20 nm and preferably less than about 10 nm, as estimated from TEM images. Polymer-platelet nanocomposites containing more individual platelets and fewer aggregates, ordered or disordered, are most preferred. Significant levels of incomplete dispersion (i.e., the presence of large agglomerates and tactoids greater than about 20 nm) not only lead to an exponential reduction in the potential barrier improvements attributable to the platelet particles, but also can lead to deleterious affects to other properties inherent to polyamide resins such as strength, toughness, and heat resistance.

Again, without being bound by a particular theory, it is believed that delamination of platelet particles upon melt mixing with a polymer requires favorable free energy of mixing, which has contributions from the enthalpy of mixing and the entropy of mixing. Melt mixing platelet particles with polymers results in a negative entropy of mixing due to the reduced number of conformations which a polymer chain has when it resides in the region between two layers of clay. It is believed that poor dispersion is obtained using melt processible polyesters because the enthalpy of mixing is not sufficient to overcome the negative entropy of mixing. In contrast, generally good dispersions are obtained with polyamides due to their hydrogen bonding character. However, the extent of this dispersion is frequently lessened because of the negative entropy of mixing. Efforts to achieve a favorable enthalpy of mixing of platelet particles with melt processible polymers by pretreating the platelet particles (e.g., by cation exchange with alkyl ammonium ions) have been unsuccessful.

Regarding the present invention, it has also been found that the use of low molecular weight polymers (oligomeric polymers) for melt mixing with platelet particles gives good dispersion, creating mostly individual particles. Without being bound by any particular theory, it is believed that the entropy of mixing decreases with decreasing number average molecular weight of the polymer, thereby decreasing the free energy of mixing, which improves dispersion and increases the probability of delaminating the platelet particles into individual platelets.

Desirable values for the I.V. or molecular weight of the oligomer depends on factors including the oligomer and clay selected as is readily determined by those skilled in the art.

Therefore, the process of this invention is operative for all polymers for which a method of increasing the composite molecular weight (or I.V) is desired. The process of this invention, although particularly useful with polyamides, is especially useful for polymers that lack the hydrogen bonding characteristic of polyamides, such as polyesters.

### Process, Nanocomposites and Articles Produced Therefrom

As stated, this invention relates generally to a process comprising the steps of (1) preparing an oligomeric resin-platelet particle composite by melt mixing platelet particles and an oligomeric resin and (2) preparing a high molecular weight polymer-platelet nanocomposite material.

In a first embodiment, this invention relates to a process for preparing an exfoliated, high I.V. polymer-platelet particle nanocomposite comprising the steps of: (i) melt mixing platelet particles with a matrix polymer-compatible oligomeric resin to form an oligomeric resin-platelet particle composite, and (ii) mixing the oligomeric resin-platelet particle composite with a high molecular weight matrix polymer thereby increasing the molecular weight of the oligomeric resin-platelet particle composite and producing an exfoliated, high I.V. polymer nanocomposite material.

Although any melt mixing device may be used, typically, the melt mixing step is conducted either by a batch mixing process or by a melt compounding extrusion process during which treated or untreated layered particles are introduced into an oligomeric resin. Prior to melt mixing, the treated or untreated layered particles may exist in various forms including pellets, flakes, chips and powder. It is preferred that the treated or untreated layered particles be reduced in size by methods known in the art, such as hammer milling and jet milling. Prior to melt mixing, the oligomeric resin may exist in wide variety of forms including pellets, ground chips, powder and its molten state.

Referring to the first embodiment of this invention, in one embodiment, the melt mixing step may be achieved by dry mixing oligomeric resin with treated or untreated layered particles then passing the mixture through a compounding extruder under conditions sufficient to melt the oligomeric resin.

In another embodiment of the first embodiment, the melt-mixing step is conducted by feeding the oligomeric resin and treated or untreated layered particles separately into a compounding extruder. When treated layered particles are used in this process, it is preferred that the oligomeric resin be added first to minimize degradation of treated layered particles.

Use of extrusion compounding to mix the clay and the polymer presents two advantages. Chiefly, the extruder is able to handle the high viscosity exhibited by the nanocomposite material. In addition, in a melt mixing approach for producing nanocomposite materials, the use of solvents can be avoided. Low molecular weight liquids can often be costly to remove from the nanocomposite resin.

In a second embodiment of this invention, a high concentration of layered particles is melt mixed with oligomeric resin by mixing in a reactor. The resulting composite material is then either chain extended, polymerized to high molecular weight, or let down in the extruder into a high molecular weight polymer to obtain the final nanocomposite material.

The oligomeric resin and the high molecular weight polymer may have the same or different repeat unit structure, i.e., may be comprised of the same or different monomer units. Preferably, the oligomeric resin has the same monomer unit to enhance compatibility or miscibility with the high molecular weight polymer.

In another embodiment of this invention, molten oligomeric resin may be fed directly to a compounding extruder along with treated or untreated layered particles to produce the oligomeric resin-platelet particle nanocomposite.

If desired, a dispersing aid may be present during or prior to the formation of the composite by melt mixing for the purposes of aiding exfoliation of the treated or untreated swellable layered particles into the polymer. Many such dispersing aids are known, covering a wide range of materials including water, alcohols, ketones, aldehydes, chlorinated solvents, hydrocarbon solvents, aromatic solvents, and the like or combinations thereof.

Formation of a high I.V. polymer-platelet particle nanocomposite may be achieved by several different methods.

For polyamides, formation of a high I.V. nanocomposite includes, but is not limited to, reactive chain extension of an oligomeric polyamide-platelet particle composite, and melt compounding of an oligomeric polyamide composite with a high molecular weight, melt processible polyamide. The monomer unit of the melt processible polyamide may be the same as or different than the oligomeric polyamide.

This invention relates to a polyamide nanocomposite material comprising a polyamide having dispersed therein platelet particles derived from various clay materials which may be untreated or metal intercalated, organically modified through cation exchange, or intercalated with other high molecular weight pretreatment compounds. Any polyamide may be used in the process of this invention. The polyamide nanocomposite is preferably a poly(m-xylylene adipamide) polymer or copolymer nanocomposite having an I.V. of at least 0.5 dL/g, preferably at least 0.7 dL/g.

This invention also relates to articles prepared from the nanocomposite material of this invention, including, but not limited to film, sheet, pipes, tubes, profiles, molded articles, preforms, stretch blow molded films and containers, injection blow molded containers, extrusion blow molded films and containers, thermoformed articles, and the like. The containers are preferably bottles.

The articles may also be multilayered. Preferably, the multilayered articles have a nanocomposite material disposed intermediate to other layers, although the nanocomposite may also be one layer of a two-layered article. In a more preferred embodiment, the article has five layers comprising (a) a first and fifth layer comprising poly(ethylene terephthalate) or a copolymer thereof, (b) a third layer comprising recycled poly(ethylene terephthalate) or a copolymer thereof, and (c) a second and fourth layer formed from the nanocomposite.

All of these additives and many others and their use are known in the art and do not require extensive discussion. Therefore, only a limited number will be referred to, it being understood that any of these compounds can be used in any combination of the layers so long as they do not hinder the present invention from accomplishing its objects.

In embodiments where the nanocomposite and its components are approved for food contact, the nanocomposite may form the food contact layer of the desired articles. In other embodiments, it is preferred that the nanocomposite be in a layer other than the food contact layer.

In another embodiment of this invention, the polymer-platelet particle nanocomposite and the molded article or extruded sheet may be formed at the same time by co-injection molding or co-extruding.

Another embodiment of this invention is the combined use of silicate layers uniformly dispersed in the matrix of a high barrier thermoplastic together with the multilayer approach to packaging materials. By using a layered clay to decrease the gas permeability in the high barrier layer, the amount of this material that is needed to generate a specific barrier level in the end application is greatly reduced. Since the high barrier material is often the most expensive component in multilayer packaging, a reduction in the amount of this material needed can be quite beneficial. With the nanocomposite layer being sandwiched between two outer polymer layers, the surface roughness is often considerably less than for a monolayer nanocomposite material. Thus, with a multilayer approach, the level of haze is reduced.

### Polyesters

The I.V. of the oligomeric polyester prior to melt mixing is preferably from about 0.05 and 0.5 dL/g, and more preferably from 0.1 dL/g to 0.3 dL/g as measured in a mixture of 60 weight percent phenol and 40 weight percent 1,1,2,2-tetrachloroethane at a concentration of 0.5 g/100ml (solvent) at 25°C. Preferably, the I.V. of the high molecular weight matrix polymer is at least 0.6 dL/g, and more preferably is 0.7 dL/g as measured in a mixture of 60 weight percent phenol and 40 weight percent 1,1,2,2-tetrachloroethane at a concentration of 0.5 g/100ml (solvent) at 25°C. Moreover, the oligomeric polyester has a number average molecular weight of from about 200 to about 10,000 g/mol and may be a homo or cooligomer.

Suitable polyesters include at least one dibasic acid and at least one glycol. The primary dibasic acids are terephthalic, isophthalic, naphthalenedicarboxylic, 1,4-cyclohexanedicarboxylic acid and the like. The various isomers of naphthalenedicarboxylic acid or mixtures of isomers may be used, but the 1,4-, 1,5, 2,6-, and 2,7-isomers are preferred. The 1,4-cyclohexanedicarboxylic acid may be in the form of cis, trans, or cis/trans mixtures. In addition to the acid forms, the lower alkyl esters or acid chlorides may be also be used.

The preferred polyester is poly(ethylene terephthalate) (PET) or a copolymer thereof. The copolymer may be prepared from two or more of the following dicarboxylic acids or glycols.

The dicarboxylic acid component of the polyester may optionally be modified with up to about 50 mole percent of one or more different dicarboxylic acids. Such additional dicarboxylic acids include dicarboxylic acids having from 6 to about 40 carbon atoms, and more preferably dicarboxylic acids selected from aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of suitable dicarboxylic acids include terephthalic acid, phthalic acid, isophthalic acid, naphthalene- 2,6-dicarboxylic acid, cyclohexanedicarboxylic acid, cyclohexanediacetic acid, diphenyl-4,4'-dicarboxylic acid, phenylenedi(oxyacetic acid) succinic acid, glutaric acid, adipic acid, azelaic acid, sebacic acid, and the like. Polyesters may be prepared from two or more of the above dicarboxylic acids.

Typical glycols used in the polyester include those containing from two to about ten carbon atoms. Preferred glycols include ethylene glycol, propanediol, 1,4-butanediol, 1,6-hexanediol, 1,4-cyclohexanedimethanol, diethylene glycol and the like. The glycol component may optionally be modified with up to about 50 mole percent, preferably up to about 25 mole percent, and more preferably up to about 15 mole percent of one or more different diols. Such additional diols include cycloaliphatic diols preferably having 6 to 20 carbon atoms or aliphatic diols preferably having 3 to 20 carbon atoms. Examples of such diols include: diethylene glycol, triethylene glycol, neopentyl glycol, 1,4-cyclohexanedimethanol, propane-1,3-diol, butane- 1,4-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol-(1,3), 2,2-diethylpropane-diol-(1,3), hexanediol-(1,3), 1,4-di-(2-hydroxyethoxy)-benzene, 2,2b-is-(4-hydroxycyclohexyl)-propane, 2,4-dihydroxy-1,1,3,3-tetramethyl-cyclobutane, 2,2-bis-(3-hydroxyethoxyphenyl)-propane, 2,2-bis-(4-hydroxypropoxyphenyl)-propane and the like. Polyesters may be prepared from two or more of the above diols.

Small amounts of multifunctional polyols such as trimethylolpropane, pentaerythritol, glycerol and the like may be used, if desired. When using 1,4-cyclohexanedimethanol, it may be the cis, trans or cis/trans mixtures when using phenylenedi(oxyacetic acid) it may be used as 1,2; 1,3; 1,4 isomers or mixtures thereof.

The resin may also contain small amounts of trifunctional or tetrafunctional comonomers to provide controlled branching in the polymers. Such comonomers include trimellitic anhydride, trimethylolpropane, pyromellitic dianhydride, pentaerythritol, trimellitic acid, trimellitic acid, pyromellitic acid and other polyester forming polyacids or polyols generally known in the art.

### Polyamides

The I.V. of the oligomeric polyamide prior to melt mixing is preferably from about 0.1 and 0.5 dL/g, and more preferably from 0.3 dL/g to 0.5 dL/g as measured in a mixture of 60 weight percent phenol and 40 weight percent 1,1,2,2-tetrachloroethane at a concentration of 0.5 g/100ml (solvent) at 25°C. Preferably, the I.V. of the high molecular weight matrix polymer is at least 0.7 dL/g and more preferably is at least 1.0 dL/ g as measured in a mixture of 60 weight percent phenol and 40 weight percent 1,1,2,2-tetrachloroethane at a concentration of 0.5 g/100ml (solvent) at 25°C. Moreover, the oligomeric polyamide has a number average molecular weight of from about 200 to about 10,000 g/mol and may be a homo or cooligomer.

Suitable polyamides used in the process of this invention include those prepared by ring opening polymerization of lactams and those prepared by condensation polymerization of diacids and diamines. Examples of suitable polyamides include poly(m-xylylene adipamide) or a copolymer thereof, isophthalic acid-modified poly(m-xylylene adipamide), nylon-6, nylon-6,6, and the like, or mixtures thereof.

Although not required, additives normally used in polymers may be used, if desired. Such additives include colorants, pigments, carbon black, glass fibers, impact modifiers, antioxidants, surface lubricants, denesting agents, UV light absorbing agents, metal deactivators, fillers, nucleating agents, stabilizers, flame retardants, reheat aids, crystallization aids, acetaldehyde reducing compounds, recycling release aids, oxygen scavenging materials, or mixtures thereof, and the like.

All of these additives and many others and their use are known in the art and do not require extensive discussion. Therefore, only a limited number will be referred to, it being understood that any of these compounds can be used in any combination of the layers so long as they do not hinder the present invention from accomplishing its objects.

### Platetet Particles

The compositions of the present invention comprise up to about 25 weight percent, preferably from 0.1 and 15 weight percent, more preferably from 0.5 to 15 weight percent and most preferably from 0.5 and 10 weight percent of certain platelet particles derived from organic and/or inorganic clay materials. The amount of platelet particles is determined by measuring the amount of ash of the polyester-platelet compositions when treated in accordance with ASTM D5630-94,

The platelet particles of the present invention have a thickness of less than about 20nm and a diameter in the range of about 10 to about 5000 nm. For the purposes of this invention measurements refer only to the platelet particle and not any dispersing aids or pretreatment compounds which might be used.

Suitable platelet particles are derived from clay materials which are free flowing powders having a cation exchange capacity between about 0.3 and about 3 meq/g and preferably between about 0.8 and about 1.5 meq/g. Examples of suitable clay materials include mica-type layered natural, synthetic or modified phyllosilicates, including clays, smectite clays, sodium montmorillonite, sodium hectorite, bentonite, nontronite, beidelite, volonsloite, saponite, sauconite, magadite, kenyaite, synthetic sodium hectorite, and the like. Clays of this nature are available from various companies including Southern Clay Products and Nanocor, Inc. Generally, the clay materials are a dense agglomeration of platelet particles, which are closely stacked together like cards.

The most preferred clay material used for the nanocomposite and process of this invention is Wyoming-type montmorillonite or Wyoming-type bentonite.

Other non-clay materials having the above-described ion-exchange capacity and size, such as chalcogens, may also be used as the source of platelet particles under the present invention. Chalcogens are salts of a heavy metal and group VIA (O, S, Se, and Te). These materials are known in the art and do not need to be described in detail here.

Improvements in gas barrier also result from increases in the concentration of platelet particles in the polymer. While amounts of platelet particles as low as 0.01 percent provide improved barrier (especially when well dispersed and ordered), compositions having at least about 0.5 weight percent of the platelet particles are preferred because they display the desired improvements in gas permeability.

Generally, it is desirable to treat the selected clay material to facilitate separation of the agglomerates of platelet particles to individual platelet particles and small tactoids. Separating the platelet particles prior to incorporation into the polymer also improves the polymer/platelet interface. Any treatment that achieves the above goals may be used. Examples of useful treatments include intercalation with water-soluble or water insoluble polymers, organic reagents or monomers, silane compounds, metals or organometallics, organic cations to effect cation exchange, and their combinations.

Treatment of the clay can be accomplished prior to the addition of a water dispersible polymer to the clay material, during the dispersion of the clay with the water soluble polymer or during a subsequent melt blending or melt fabrication step.

Examples of useful pretreatment with polymers and oligomers include those disclosed in U.S. Patents 5,552,469 and 5,578,672.

Examples of useful polymers for intercalating the platelet particles include polyvinyl pyrrolidone, polyvinyl alcohol, polyethylene glycol, polytetrahydrofuran, polystyrene, polycaprolactone, certain water dispersible polyesters, Nylon-6 and the like.

Examples of-useful pretreatment with organic reagents and monomers include those disclosed in EP 780,340 A1.
Examples of useful organic reagents and monomers for intercalating the platelet particles include dodecylpyrrolidone, caprolactone, caprolactam, ethylene carbonate, ethylene glycol, bishydroxyethyl terephthalate, dimethyl terephthalate, and the like or mixtures thereof.

Examples of useful pretreatment with silane compounds include those treatments disclosed in WO 93/11190. Examples of useful silane compounds includes (3-glycidoxypropyl)trimethoxysilane, 2-methoxy (polyethyleneoxy)propyl heptamethyl trisiloxane, octadecyl dimethyl (3-trimethoxysilylpropyl) ammonium chloride and the like.

### Organic Cations

Numerous methods to modify layered particles with organic cations to form an organoclay are known, and any of these may be used in the process of this invention. One embodiment for preparing an organoclay is the modification of a swellable layered particle with an onium cation. Typically, an organoclay is prepared by dispersing a layered particle material in hot water, most preferably from 50 to 80°C, adding an organic cation salt (onium cation) or combinations of organic cation salts (neat or dissolved in water or alcohol) with agitation, then blending for a period of time sufficient for the organic cations to exchange most of the metal cations present in the galleries between the layers of the clay material. Then, the organically modified layered particulate material is isolated by methods known in the art including, but not limited to, filtration, centrifugation, spray drying, and their combinations.

It is desirable to use a sufficient amount of the organic cation salt to permit exchange of most of the metal cations in the galleries of the layered particle for organic cations; therefore, at least about 1 equivalent of organic cation salt is used and up to about 3 equivalents of organic cation salt can be used. It is preferred that about 0.5 to 2 equivalents of organic cation salt be used, more preferable about 1.1 to 1.5 equivalents. It is often desirable, but not required, to remove most of the metal cation salt and most of the excess organic cation salt by washing and by other techniques known in the art.

Useful organic cation salts for the process of this invention can be represented as follows: 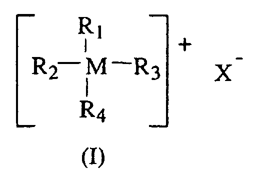 wherein M is nitrogen or phosphorous; X⁻ is a halide, hydroxide, or acetate anion, preferably chloride and bromide; R₁, R₂, R₃ and R₄ are independently organic and oligomeric ligands or hydrogen. Examples of useful organic ligands include, but are not limited to, linear or branched alkyl groups having 1 to 22 carbon atoms, aralkyl groups which are benzyl and substituted benzyl moieties including fused ring moieties having linear chains or branches of 1 to 22 carbon atoms in the alkyl portion of the structure, aryl groups such as phenyl and substituted phenyl including fused ring aromatic substituents, beta, gamma unsaturated groups having six or less carbon atoms, and alkyleneoxide groups having 2 to 6 carbon atoms. Examples of useful oligomeric ligands include, but are not limited to, poly(alkylene oxide), polystyrene, polyacrylate, polycaprolactone, and the like.

In one embodiment, the organic cation is not an organic cation salt represented by Formula (I): 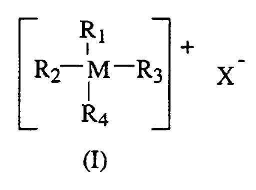 wherein M is nitrogen or phosphorous, X⁻ is a halide, hydroxide, or acetate anion, R₁ is a straight or branched alkyl group having at least 8 carbon atoms, and R₂, R₃, and R₄ are independently hydrogen or a straight or branched alkyl group having 1 to 4 carbon atoms.

Examples of useful organic cations include, but are not limited to, alkyl ammonium ions, such as dodecyl ammonium, octadecyl ammonium, bis(2-hydroxyethyl) octadecyl methyl ammonium, octadecyl benzyl dimethyl ammonium, tetramethyl ammonium, and the like or mixtures thereof, and alkyl phosphonium ions such as tetrabutyl phosphonium, trioctyl octadecyl phosphonium, tetraoctyl phosphonium, octadecyl triphenyl phosphonium, and the like or mixtures thereof.

Illustrative examples of suitable polyalkoxylated ammonium compounds include those available under the trade name ETHOQUAD or ETHOMEEN from Akzo Chemie America, namely, ETHOQUAD 18/25 which is octadecyl methyl bis(polyoxyethylene[15]) ammonium chloride and ETHOMEEN 18/25 which is octadecyl bis(polyoxyethylene[15])amine, wherein the numbers in brackets refer to the total number of ethylene oxide units. The most preferred organic cation is octadecyl methyl bis(polyoxyethylene[15]) ammonium chloride.

The particle size of the organoclay is reduced in size by methods known in the art, including, but not limited to, grinding, pulverizing, hammer milling, jet milling, and their combinations. It is preferred that the average particle size be reduced to less than 100 microns in diameter, more preferably less than 50 microns in diameter, and most preferably less than 20 microns in diameter.

It should be appreciated that on a total composition basis, dispersing aids and/or pretreatment compounds may account for significant amount of the total composition, in some cases up to about 30 weight percent. While it is preferred to use as little dispersing aid/pretreatment compounds as possible, the amounts of dispersing aids and/or pretreatment compounds may be as much as about 8 times the amount of the platelet particles.

### Examples

The following examples and experimental results are included to provide those of ordinary skill in the art with a complete disclosure and description of particular manners in which the present invention can be practiced and evaluated, and are intended to be purely exemplary of the invention and are not intended to limit the scope of what the inventors regard as their invention. Efforts have been made to ensure accuracy with respect to numbers (e.g., amounts, temperature, etc.); however, some errors and deviations may have occurred. Unless indicated otherwise, parts are parts by weight, temperature is in °C or is at ambient temperature, and pressure is at or near atmospheric.

### Examples

### Preparation of an organoclay.

36.0 g (34.2 meq) of sodium montmorillonite (supplied by Southern Clay Products and reported to have a cation exchange capacity of 95 milliequivalents/100 grams) and 1800 ml of distilled water at 100°C were blended in a Waring Commercial Heavy Duty Blender for 2.5 minutes at the highest stirring rate (about 1000 rpm). 33.5 g (34.2 meq) of octadecyl-methyl[ethoxylated(15)] ammonium chloride (commercially available as ETHOQUAD 18/25) in 200 ml of hot distilled water were added to the mixer and blended for 2.5 minutes. The solids were then removed by filtration with a 3000 mL Buchner funnel with medium fritted disk. The wet solids were then slurried in 500 mL of water in a Waring Commercial Heavy Duty Blender and filtered. The filtercake was dried at 80°C in a vacuum oven (with nitrogen sweep) for 16 hours to provide 28 grams of a light tan solid. Analysis by X-ray diffraction showed a basal spacing of 3.38 nm. Ash residue, which is a measure of the inorganic content, was 52.1 weight percent. The material was passed through a hammer mill then a jet mill to reduce the number average particle size to about 7 microns.

### Examples

In the following examples, to obtain a highly exfoliated m-xylyladipamide polyamide (MXD6) nanocomposite, oligomeric MXD6 is mixed with a series of montmorillonite organoclays. These materials are melt mixed in a laboratory reactor and an assessment is conducted of their dispersion into the MXD6. The morphology of these composite materials is then evaluated to assess which organoclay exhibited the greatest tendency to exfoliate into the MXD6 oligomer.

### Example 1

A low molecular weight m-xylyladipamide polyamide (oligomeric MXD6) was prepared. This material was analyzed by titration of the amine.and carboxylate end groups to possess a number average molecular weight of about 3,000, and was determined to have an I.V. of about 0.41 dL/g. 306.4 grams of this oligomeric poly(m-xylyladipoyl diamine) was dry mixed with 55 grams of SCPX-1578 organomontmorillonite clay purchased from Southern Clay Products and then dried at 110°C overnight in a vacuum oven. The mixture was then extruded on the Leistritz Micro 18 corotating twin screw extruder equipped with a general compounding screw. The AccuRate pellet feeder was set at a rate of approximately 2 kg/hr with a nitrogen atmosphere over both the feeder and the hopper. The barrel and die temperatures were set at 280°C and the screw RPM at approximately 275. After the extrusion was complete, 100 grams of the extrudate pellets are dry-mixed with 300 grams of MXD6 6001 polyamide pellets purchased from Mitsubishi Chemical. The MXD6 polyamide possessed an I.V. of about 1.1 dL/g. The mixture was then extruded on the Leistritz extruder under the same conditions used with the clay polymer mixture but at a feed rate of 2.0 to 2.5 kg/hour.

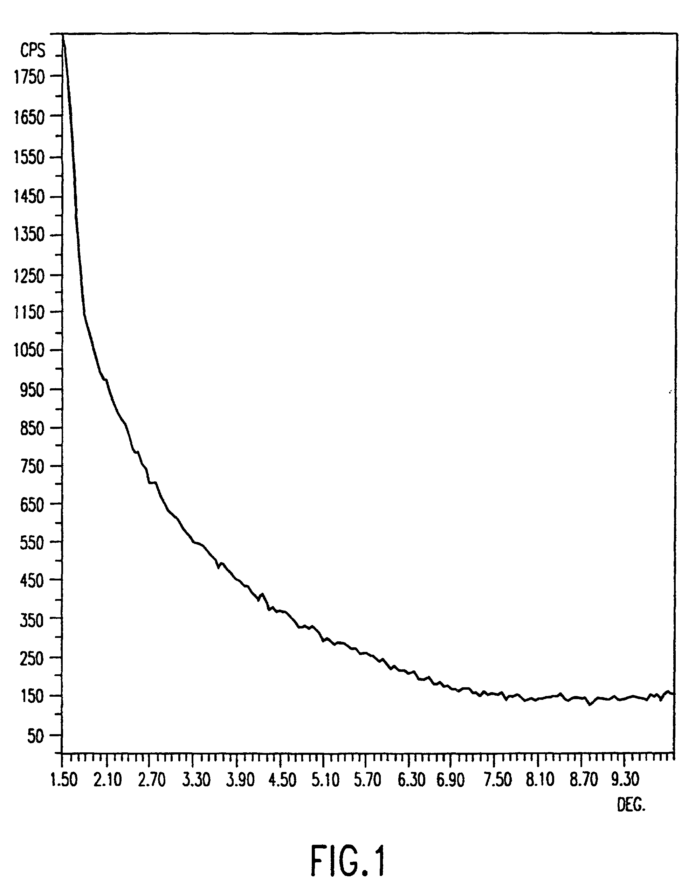

The material obtained was then characterized by optical microscopy (OM), transmission electron microscopy (TEM) and by wide angle X-ray diffraction (WAXD) to determine the degree of dispersion of the organoclay into the polymer matrix and to assess the morphology of the composite material. The WAXD analysis was carried out on a ground sample of the material using an X-ray diffractometer equipped with a Cu Kα X-ray source. The diffraction profile from the organoclay exhibits a diffraction maximum corresponding to a basal spacing value of 1.8 nm. For the nanocomposite material, no diffraction maximum is exhibited in the WAXD profile (Figure 1). The X-ray intensity decreases monotonically throughout the entire angular range of the diffraction angle, θ from 1.5° to 10°. By optical microscopy it is determined that the composite material exhibits a high degree of clarity, indicating that most of the organoclay is well distributed into the matrix of the polymer. The transmission electron micrographs verified that, in most cases, each of the clay layers is exfoliated, i.e. individually dispersed in the polymer matrix.

A film was formed from the nanocomposite material by compression molding on a hydraulic press at 280°C followed by immediate quenching in ice water to minimize crystallization on cooling. The oxygen barrier of the film was then determined on a Mocon 2/20 oxygen permeability tester to be 1.15 x 10⁻⁵ cc m/m²-24hr-bar (0.03 cc mil/100 in²-24hr.-atm).

### Example 2

The procedure of Example 1 was repeated using 300 grams of the oligomeric poly(m-xylyladipoyl diamine) dry mixed with 50.6 grams of SCPX-1580 organomontmorillonite clay purchased from Southern Clay Products, and then 120 grams of the oligomeric nanocomposite extrudate pellets and 300 grams of MXD6 6001 polyamide pellets.

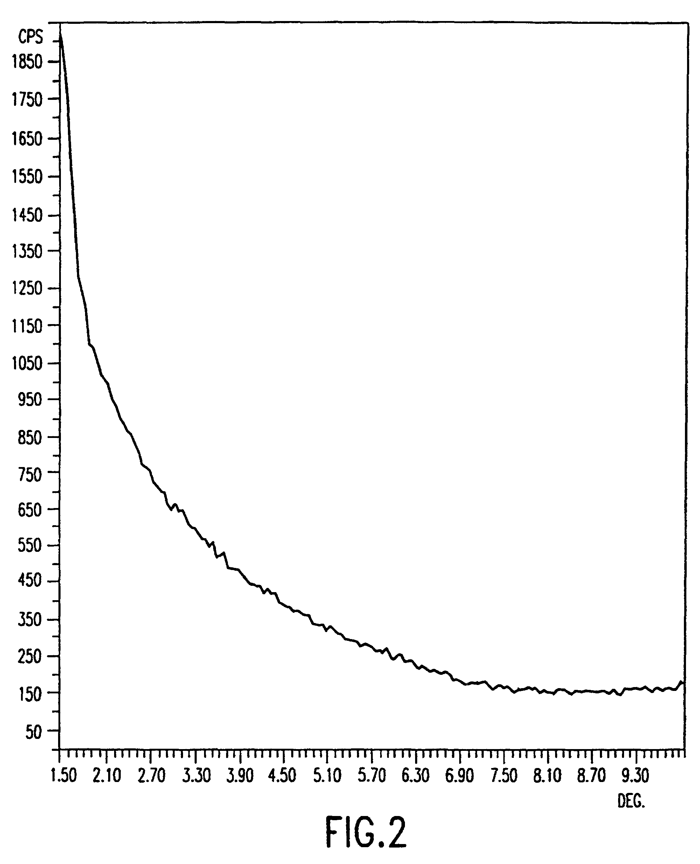

The morphology of the product was assessed in a manner similar to that described in Example 1. For the nanocomposite material, no diffraction maximum was exhibited in the WAXD profile (Figure 2), with the X-ray intensity decreasing monotonically throughout the entire angular range. By optical microscopy a high degree of clay dispersion was observed for the composite material. The transmission electron micrographs verified that, in most cases, each of the clay layers is exfoliated.

A film was formed from the nanocomposite material by compression molding on a hydraulic press at 280°C followed by immediate quenching in ice water to minimize crystallization on cooling. The oxygen barrier of the film was then determined on a Mocon 2/20 oxygen permeability tester to be 1.5 x 10⁻⁵ cc m/m²-24hr-bar (0.04 cc mil/100 in²-24hr-atm.)

### Example 3

The procedure of Example 2 was repeated using 76 grams of SCPX-1961 montmorillonite clay purchased from Southern Clay Products in place of SCPX-1580.

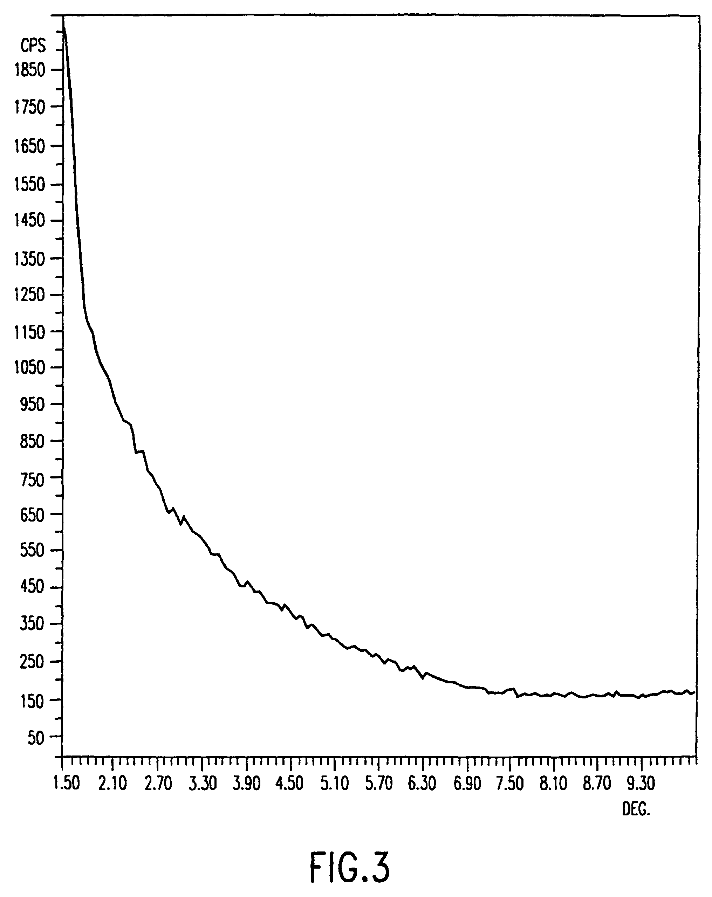

The morphology of this material was assessed in a manner similar to that described in Example 1. For the nanocomposite material, only very weak diffraction maxima were exhibited in the WAXD profile (Figure 3), indicative of basal spacing values of approximately 2 and 3.7 nm. By optical microscopy a high degree of clay dispersion was observed for the composite material. The transmission electron micrographs verify that, in most cases, each of the clay layers is exfoliated.

### Example 4

In this example, 4854 grams of oligomeric poly(m-xylyladipoyl diamine) was dry mixed with 836 g of SCPX-1578, both described in Example 1. The mixture, prior to compounding, was dried overnight in a vacuum oven at 100°C and then allowed to cool. This material was then processed on a Werner-Pfleiderer 30 mm twin screw extruder (WP-30) equipped with general compounding screws, with the RPM set at 300. The temperature profile of the extruder barrel was set with the first zone at 200°C increasing eventually to 260°C at the die zone. The extrude was collected, ground and vacuum dried overnight at 100°C. A dry blend was then made of 4666 g of this extrudate with 11913 g of MXD6 6007, purchased from Mitsubishi Chemical Company. The mixture was than extruded and pelletized on the WP-30 with a processing temperature of 260°C and a screw RPM of 300. The resulting material was then dried overnight at approximately 110°C in a vacuum oven.

The morphology of this material was assessed in a manner similar to that described in Example 1. The transmission electron micrographs verified that, in most cases, each of the clay layers is exfoliated. For the nanocomposite material, no diffraction maximum was exhibited in the WAXD profile. The X-ray intensity decreases monotonically throughout the entire angular range of the diffraction angle, θ from 1.5° to 10°. When this material was analyzed by ashing, 2.8% of the original weight was obtained.

The pellets of this material were forwarded to two plastics processing firms for the injection molding of tri-layer preforms and the subsequent stretch blow molding into bottles. The oxygen permeability of the bottle sidewall was determined on the Mocon Ox-tran 2/20 oxygen permeability tester. The oxygen permeability of the barrier layer of the bottle sidewall was characterized at 1.5 x 10⁻⁵ cc m/m²-24hr-bar to 2.3 x 10⁻⁵ cc m/m²-24hr-bar (0.04 cc/100 in²-24hr-atm and 0.06 cc/100 in²-24hr-atm) for the bottles prepared by the two multilayer injection molding presses with subsequent stretch blow molding.

Bottle controls were prepared containing MXD6 6007 as the barrier layer. The oxygen permeability of the sidewall barrier materials in these bottles was approximately 1.15 x 10⁻⁵ cc m/m²-24hr-bar (0.3 cc/100 in²-24hr-atm).

### Example 5

In this example, 500 grams of oligomeric poly(m-xylyladipoyl diamine), described in Example 1, was dry mixed with 68.9 grams of SCPX-1580 montmorillonite clay, described Example 18. The mixture was dried overnight in a vacuum oven at 120°C, allowed to cool, and then mixed with 29.6 grams of pyromellitic dianhydride purchased from Aldrich Chemical Company. This material. was then processed on a Leistritz Micro 18 corotating twin screw extruder equipped with general compounding screw. A feed rate of approximately 1.5 kg/hour was selected using an AccuRate feeder. The material was processed at 280°C and 250 rpm with a vacuum hose attached to the vent port on the 7^{th} zone of the extruder.

The morphology of this material was assessed in a manner similar to that described in Example 1. The transmission electron micrographs verified that, in most cases, each of the clay layers is exfoliated. For the nanocomposite material, no diffraction maximum was exhibited in the WAXD profile. The X-ray intensity decreases monotonically throughout the entire angular range of the diffraction angle, θ from 1.5° to 10°. The low angle laser light scattering (LALLS) results of the nanocomposite indicate that the weight average molecular weight of the polyamide component increased from 6,000 g/mole to 18,000 g/mole as a result of the chain extension process.

### Example 6

In this example 200 grams of poly(m-xylyladipoyl diamine) polyamide, described in Example 1, was dry mixed with 8.3 grams of SCPX-1580 montmorillonite clay, described in Example 2. The mixture was dried overnight in a vacuum oven at 120°C, allowed to cool, and added to a 500 ml round bottom flask. This material was purged with nitrogen gas, evacuated, and flushed again with nitrogen gas. The material was then melted and processed at 280°C for 1 hour under constant stirring.

The morphology of this material was assessed in a manner similar to that described in Example 1. The transmission electron micrographs verified that, in most cases, the clay layers are exfoliated. For the nanocomposite material, no diffraction maximum was exhibited in the WAXD profile. The X-ray intensity decreases monotonically throughout the entire angular range of the diffraction angle, θ from 1.5° to 10°.

### Example 7

75.0 grams of an amine terminated oligomeric poly(m-xylyladipamide) with I.V. of 0.43 dL/g, 3.20 grams of adipic acid, 2.16 grams of SCPX-1580 onium ion intercalated clay, and 50.0 grams of water were charged to a 500-mL roundbottom flask fitted with a short distillation column and a mechanical stirrer. Under a dynamic nitrogen atmosphere the flask was heated at 100 C with stirring at 150 rpm for about 1.5 hrs. Then the temperature was increased to 275°C over a period of about 1.5 hr to drive off the water and melt the reactants. The material kept at 275°C for about 30 minutes. The resulting product had an I.V. of about 0.80 dL/g and analysis by WAXS showed no basal spacing of the clay.

This example demonstrates the formation of a nanocomposite using oligomeric polyamide and chain extension of the oligomeric polyamide to high polymer.

### Comparative Example 1

931 grams of MXD6 6001, poly(m-xylyladipoyl diamine) with an I.V. of about 1.1 dL/g, was dry mixed with 68.9 grams of SCPX-1578 montmorillonite clay, described in Example 1. The mixture was dried at 110°C overnight in a vacuum oven then extruded on the Leistritz Micro 18 extruder. Equipped with a general compounding screw. The AccuRate pellet feeder was set at a rate of approximately 2 kg/hr with a nitrogen atmosphere over both the feeder and the hopper. The barrel and die temperatures were set at 280°C and the screw RPM at approximately 275.

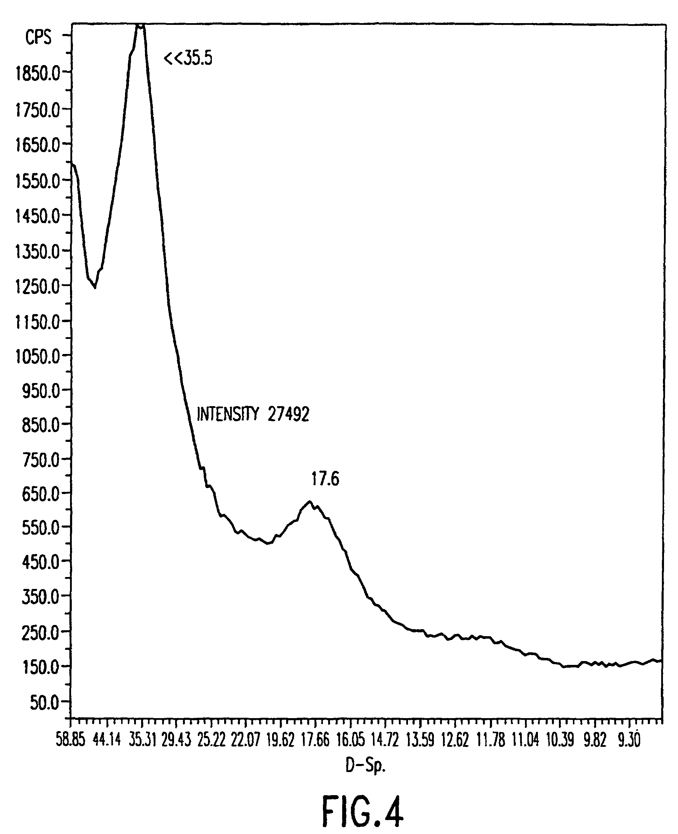

The morphology of this material was assessed in a manner similar to that described in Example 1. For the nanocomposite material, in the WAXD profile, (Figure 4) diffraction maxima are observed indicative of a basal spacing values at about 1.76 and 3.55nm.

By optical microscopy, a high fraction of larger clay particles is observed for the composite material. The transmission electron micrographs of the composite material exhibit many clay tactoids comprised of low numbers of clay layers.

### Comparative Example 2

The procedure of Comparative Example 1 was repeated using 932 grams of MXD6 6001 poly (m-xylyladipoyl diamine) and 67.6 grams of SCPX-1580 montmorillonite clay, both described in Example 2. The morphology of this material was assessed in a manner similar to that described in Example 1. For the nanocomposite material, in the WAXD profile (Figure 5), a diffraction maximum is observed indicative of a basal spacing values at about 1.61 and 3.32 nm.

By optical microscopy, a high fraction of larger clay particles is observed for the composite material. The transmission electron micrographs of the composite material exhibit many clay tactoids comprised of several layers.

### Comparative Example 3

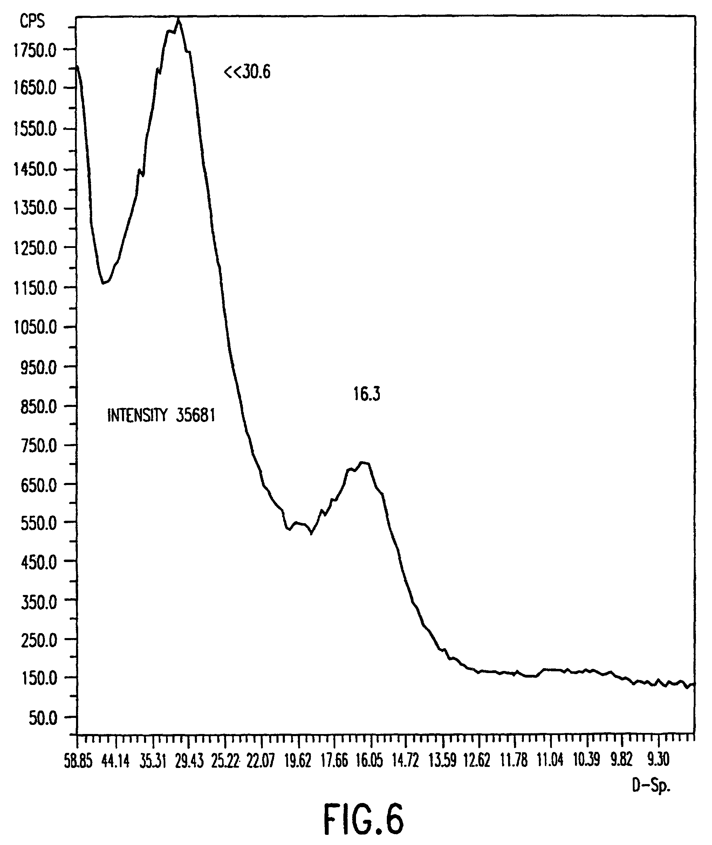

The procedure of Comparative Example 1 was repeated using 900 grams of MXD6 6001 poly(m-xylyladipoyl diamine) and 100 grams of SCPX-1961 montmorillonite clay, described in Example 1. The morphology of this material was assessed in a manner similar to that described in Example 17. For the nanocomposite material, in the WAXD profile (Figure 6), a diffraction maximum is observed indicative of a basal spacing values at about 1.63 and 3.06 nm.

By optical microscopy, a high fraction of larger clay particles is observed for the composite material. The transmission electron micrographs of the composite material exhibit many clay tactoids comprised of several layers.

A comparison of the above Examples, which incorporate oligomer precursors (polyester and polyamide) thereby forming a composite prior to forming a high molecular weight nanocomposite material, with the Comparative Examples (that do not utilize an oligomer) illustrates that using an oligomer precursor improves the state of exfoliation of the resulting nanocomposite. By improving the exfoliated state, higher barrier articles may be made.

Throughout this application, various publications are referenced. The disclosures of these publications in their entireties are hereby incorporated by reference into this application in order to more fully describe the state of the art to which this invention pertains.

It will be apparent to those skilled in the art that various modifications and variations can be made in the present invention without departing from the scope of the invention. Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. An exfoliated, high I.V. polymer-platelet particle nanocomposite comprising:
a high molecular weight matrix polyamide prepared by condensation polymerization of diacids and diamines, and
platelet particles exfoliated in the matrix polymer, wherein the platelet particles are dispersed in a matrix polymer-compatible oligomeric resin and wherein the platelet particle-oligomer resin dispersion is incorporated into the matrix polymer.

2. The nanocomposite of claim 1, wherein the high molecular weight matrix polymer is poly(m-xylylene adipamide) or a copolymer thereof, isophthalic acid-modified poly(m-xylylene adipamide), nylon-6,6, or a copolymer thereof, or a mixture thereof.

3. The nanocomposite of claim 1, wherein the oligomeric resin and the high molecular weight matrix polymer have the same monomer units.

4. The nanocomposite of claim 1, wherein the oligomeric resin is oligo(m-xylylene adipamide), or a cooligomer thereof, and the high molecular weight matrix polymer is poly(m-xylylene adipamide), or a copolymer thereof.

5. The nanocomposite of claim 1, wherein the nanocomposite material comprises greater than zero to 25 weight percent of platelet particles.

6. The nanocomposite of claim 1, wherein the platelet particles have a thickness of less than 20 nm and a diameter of 10 to 5000nm.

7. The nanocomposite of claim 1, wherein the platelet particles are derived from organic or inorganic clay material.

8. The nanocomposite of claim 7, wherein the clay material is a natural, synthetic or modified phyllosilicate.

9. The nanocomposite of claim 1, having an I.V. of at least 0.9 dL/g as measured in a mixture of 60 weight percent phenol and 40 weight percent 1,1,2,2-tetrachloroethane at a concentration of 0.5 g/100 ml (solvent) at 25°C.

10. An article prepared from the nancomposite of claim 1.

11. The article of claim 10 in the form of film, fiber, sheet, an extruded article, a molded article, or a molded container.

12. The article of claim 10 in the form of a bottle.

13. The article of claim 10, having a gas permeability which is at least 15 percent lower than that of unmodified polymer.

14. An article having a plurality of layers where at least one layer is formed from the nanocomposite of claim 1.

15. The article of claim 14, wherein the nanocomposite is disposed intermediate to two other layers.

16. The article of claim 14, having five layers comprising:
(a) a first and fifth layer comprising poly(ethylene terephthalate) or a copolymer thereof.
(b) a third layer comprising recycled poly(ethylene terephthalate) or a copolymer thereof, and
(c) a second and fourth layer formed from the nanocomposite.

17. The article of claim 16, wherein at least one layer further comprises an additional compound selected from the group consisting of colorants, pigments, carbon black, glass fibers, impact modifiers, antioxidants; surface lubricants, denesting agents, UV light absorbing agents, metal deactivators, fillers, nucleating agents, stabilizers, flame retardants, reheat aids, crystallization aids, acetaldehyde reducing compounds, recycling release aids, oxygen scavenging materials, and mixtures thereof.

18. The nanocomposite of claim 1, wherein at least 75 percent of the platelet particles are dispersed in the form of individual platelets and aggregates in the nanocomposite material.

19. The nanocomposite of claim 18, having an I.V. of at least 0.9 dL/g as measured in a mixture of 60 weight percent phenol and 40 weight percent 1,1,2,2-tetrachloroethane at a concentration of 0.5 g/100 ml (solvent) at 25°C.

20. An article prepared from the nanocomposite of claim 18.

21. The article of claim 20 in the form of film, fiber, sheet, an extruded article, or a molded article, or a molded container.

22. The article of claim 20 in the form of a bottle.

23. The article of claim 20, having a gas permeability which is at least 15 percent lower than that of unmodified polymer.

24. A process for preparing an exfoliated, high I.V. polymer-platelet particle nanocomposite comprising the steps of:
(i) melt mixing platelet particles with a matrix polymer-compatible oligomeric resin to form an oligomeric resin-platelet particle composite, and
(ii) mixing the oligomeric resin-platelet particle composite with a high molecular weight matrix polyamide prepared by condensation polymerization of diacids and diamines, thereby producing an exfoliated, high I.V. polymer nanocomposite material.

25. The process of claim 24, wherein step (i) is conducted by a batch mixing or melt compounding extrusion process.

26. The process of claim 24, wherein step (i) is conducted by
(a) dry mixing the oligomeric resin with platelet particles prior to melt mixing, thereby forming a dry mixture, and
(b) melt mixing the dry mixture through a compounding extruder to form the oligomeric resin-platelet particle composite.

27. The process of claim 24, wherein step (i) is conducted by
(a) feeding the oligomeric resin and platelet particles separately into a compounding extruder, and
(b) melt mixing the oligomeric resin and platelet particles through the compounding extruder to form the oligomeric resin-platelet particle composite.

28. The process of claim 24, wherein step (i) is conducted by
(a) feeding the oligomeric resin into a compounding extruder,
(b) feeding the platelet particles into the compounding extruder after the oligomeric resin, and
(c) melt mixing the oligomeric resin and platelet particles through the compounding extruder to form the oligomeric resin-platelet particle composite.

29. The process of claim 24, wherein step (i) is conducted by melt mixing the oligomeric resin with the platelet particles in a reactor to form the oligomeric resin-platelet particle composite prior to feeding the melt mixing into a compounding extruder.

30. The process of claim 24, wherein step (i) is conducted by
(a) melting the oligomeric resin to form molten oligomeric resin, and
(b) melt mixing the molten oligomeric resin and platelet particles through a compounding extruder to form the oligomeric resin-platelet particle composite.

31. The process of claim 24, wherein step (ii) is conducted by melt compounding the oligomeric resin-platelet particle composite with the high molecular weight matrix polyamide.

32. The process of claim 24, wherein the high molecular weight matrix polyamide has a weight average molecular weight greater than 20,000 g/mol.

33. The process of claim 24, wherein the high molecular weight matrix polyamide has an I.V. of at least 0.7 dL/g as measured in a mixture of 60 weight percent phenol and 40 weight percent 1,1,2,2-tetrachloroethane at a concentration of 0.5 g/100 ml (solvent) at 25°C.

34. The process of claim 33, wherein the polyamide is poly(m-xylylene adipamide) or a copolymer thereof, isophthalic acid-modified poly (m-xylylene adipamide), nylon-6,6, or a copolymer thereof, or mixture thereof.

35. The process of claim 24, wherein the oligomeric resin and the high molecular weight matrix polymer have the same monomer units.

36. The process of claim 24, wherein the oligomeric resin is oligo(m-xylylene adipamide), or a cooligomer thereof, and the high molecular weight matrix polymer is poly(m-xylylene adipamide), or a copolymer thereof.

37. The process of claim 24, wherein the oligomeric resin is an oligomeric polyester.

38. The process of claim 24, wherein the oligomeric resin is an oligomeric polyamide.

39. The process of claim 24, wherein the oligomeric resin is a homooligomer or cooligomer.

40. The process of claim 24, wherein the oligomeric resin has an I.V. of from 0.1 dL/g to 0.5 dL/g as measured in a mixture of 60 weight percent phenol and 40 weight percent 1,1,2,2-tetrachloroethane at a concentration of 0.5g/100 ml (solvent) at 25°C.

41. The process of claim 24, wherein the oligomeric resin has a number average molecular weight of from 200 to 10,000 g/mol.

42. The process of claim 24, wherein the nanocomposite material comprises greater than zero to 25 weight percent of platelet particles.

43. The process of claim 24, wherein the nanocomposite material comprises from 0.1 to 15 weight percent of platelet particles.

44. The process of claim 24, wherein the nanocomposite material comprises from 0.5 to 10 weight percent of platelet particles.

45. The process of claim 24, wherein at least 75 percent of the platelet particles are dispersed in the form of individual platelets and aggregates in the nanocomposite material.

46. The process of claim 24, wherein the platelet particles have a thickness of less than 20 nm and a diameter of from 10 to 5000 nm.

47. The process of claim 24, wherein the platelet particles are derived from organic or inorganic layered clay material.

48. The process of claim 47, wherein the clay material is in the form of pellets, flakes, chips, powder, or a mixture thereof.

49. The process of claim 47, wherein the clay material is a natural, synthetic or modified phyllosilicate.

50. The process of claim 49, wherein the phyllosilicate is smectite, sodium montmorillonite, sodium hectorite, bentonite, nontronite, beidelite, volonsloite, saponite, sauconite, magadite, kenyaite, or synthetic sodium hectorite or a mixture thereof.

51. The process of claim 24, wherein the platelet particles are treated with a water soluble or insoluble polymer, an organic reagent or monomer, a silane compound, a metal, an organometallic, or an organic cation, to effect cation exchange or a combination thereof.

52. The process of claim 51, wherein the organic cation is not an organic cation salt represented by the Formula (1): 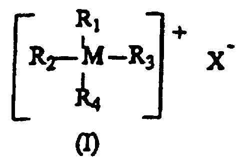 wherein M is nitrogen or phosphorous, X⁻ is a halide, hydroxide, or acetate anion, R₁ is a straight or branched alkyl group having at least 8 carbon atoms, and R₂, R₃, and R₄ are independently hydrogen or a straight or branched alkyl group having 1 to 4 carbon atoms.

53. The process of claim 24, wherein the platelet particles are derived from a clay material that is a free flowing powder having a cation exchange capacity from 0.3 to 3 meq/g.

54. The process of claim 53, wherein the cation exchange capacity is from 0.8 to 1.5 meq/g.

55. A nanocomposite material produced by the process of claim 24.

56. An article prepared from the nanocomposite material of claim 55.

57. The article of claim 56 in the form of film, sheet, fiber, an extruded article, a molded article, or a molded container.

58. The article of claim 56 in the form of a bottle.

59. The article of claim 56 having a gas permeability that is at least 15 percent lower than that of unmodified polymer.

60. A process for preparing an exfoliated, high I.V. polymer-platelet particle nanocomposite comprising:
melt mixing platelet particles, a matrix polymer-compatible oligomeric resin, and a high molecular weight matrix polyamide prepared by condensation polymerization of diacids and diamines, thereby producing an exfoliated, high I.V. polymer nanocomposite material.

61. The process of claim 60, wherein the high molecular weight matrix polyamide has a weight average molecular weight greater than 20,000 g/mol.

62. The process of claim 60, wherein the matrix polyamide is poly(m-xylylene adipamide) or a copolymer thereof, isophthalic acid-modified poly(m-xylylene adipamide), nylon-6.6, or a copolymer thereof, or a mixture thereof.

63. The process of claim 60, wherein the oligomeric resin and the high molecular weight matrix polyamide have the same monomer units.

64. The process of claim 60, wherein the-oligomeric resin is oiigo-(m-xylylene adipamide), or a cooligomer thereof, and the high molecular weight matrix polyamide is poly(m-xylylene adipamide), or a copolymer thereof.

65. The process of claim 60, wherein the oligomeric resin is a homooligomer or cooligomer.

66. The process of claim 60, wherein the oligomeric resin has an I.V. of from 0.1 dL/g to 0.5dL/g as measured in a mixture of 60 weight percent phenol and 40 weight percent 1,1,2,2-tetrachloroethane at a concentration of 0.5 g/100 ml (solvent) at 25°C.

67. The process of claim 60, wherein the nanocomposite material comprises greater than zero to 25 weight percent of platelet particles.

68. The process of claim 60, wherein at least 75 percent of the platelet particles are dispersed in the form of individual platelets and aggregates in the nanocomposite material.

69. The process of claim 60, wherein the platelet particles are derived from organic or inorganic layered clay material.

70. The process of claim 60, wherein the platelet particles are treated with a water soluble or insoluble polymer, an organic reagent or monomer, a silane compound, a metal, an organometallic, or an organic cation, to effect cation exchange, or a combination thereof.

71. The process of claim 70, wherein the organic cation is not an organic cation salt represented by Formula (I): 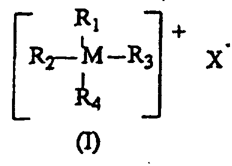 wherein M is nitrogen or phosphorous, X⁻ is a halide, hydroxide, or acetate anion, R₁ is a straight or branched alkyl group having at least 8 carbon atoms, and R₂, R₃ and R₄ are independently hydrogen or a straight or branched alkyl group having 1 to 4 carbon atoms.

72. A nanocomposite material produced by the process of claim 60.

73. An article prepared from the nanocomposite material of claim 72.

74. The article of claim 73 in the form of film, sheet, fiber, an extruded article, a molded article, or a molded container.

75. The article of claim 73 in the form of a bottle.

76. The article of claim 73 having a gas permeability which is at least 15 percent lower than that of unmodified polymer.

77. A process for preparing an exfoliated, high I.V. polymer-platelet particle nanocomposite comprising the steps of:
(i) melt mixing platelet particles with an oligomeric polyamide resin prepared by condensation polymerization of diacids and diamines to form an oligomeric polyamide resin-platelet particle composite, and
(ii) increasing the molecular weight of the oligomeric polyamide resin-platelet particle composite by reactive chain extension of the oligomeric polyamide resin to produce an exfoliated, high I.V. nanocomposite material.

78. The process of claim 77, wherein the oligomeric polyamide resin is an oligomeric polyamide.

79. The process of claim 77, wherein the oligomeric polyamide resin has an I.V. of from 0.1dL/g to 0.5 dL/g as measured in a mixture of 60 weight percent phenol and 40 weight percent 1,1,2,2-tetrachloroethane at a concentration of 0.5 g/100 ml (solvent) at 25°C.

80. The process of claim 77, wherein the platelet particles are treated with a water soluble or insoluble polymer, an organic reagent or monomer, a silane compound, a metal, an organometallic, or an organic cation, to effect cation exchange, or a combination thereof.

81. The process of claim 80, wherein the organic cation is not an organic cation salt represented by Formula (I): 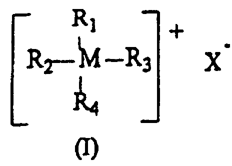 wherein M is nitrogen or phosphorous, X⁻ is a halide, hydroxide, or acetate anion, R₁ is a straight or branched alkyl group having at least 8 carbon atoms, and R₂, R₃, and R₄ are independently hydrogen or a straight or branched alkyl group having 1 to 4 carbon atoms.

82. A nanocomposite material produced by the process of claim 77.

83. An article prepared from the nanocomposite material of claim 82.

84. The article of claim 83 in the form of film, sheet, fiber, and extruded article, a molded article, or a molded container.

85. The article of claim 83 in the form of a bottle.

86. A process for preparing an exfoliated, high I.V. polymer-platelet particle nanocomposite comprising the steps of:
(i) contacting a clay with an organic cation to form an organoclay comprising platelet particles,
(ii) melt mixing the organoclay with a matrix polymer-compatible oligomeric resin to form an oligomeric resin-platelet particle composite, and
(iii) mixing the oligomeric resin-platelet particle composite with a high molecular weight matrix polyamide prepared by condensation polymerization of diacids and diamines, thereby producing an exfoliated, high I.V. polymer nanocomposite material.

87. The process of claim 86, wherein step (ii) is conducted by a batch mixing or a melt compounding extrusion process.

88. The process of claim 86, wherein the step (iii) is conducted by melt compounding the oligomeric resin-platelet particle composite with the high molecular weight matrix polyamide.

89. The process of claim 86, wherein the organic cation is not an organic cation salt represented by the Formula (I): 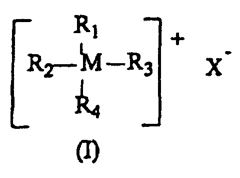 wherein M is nitrogen or phosphorous, X⁻ is a halide, hydroxide, or acetate anion, R₁ is a straight or branched alkyl group having at least 8 carbon atoms, and R₂, R₃, and R₄ are independently hydrogen or a straight or branched alkyl group having 1 to 4 carbon atoms.

## Patentansprüche

1. Ein exfoliertes Polymer-Plättchenteilchen-Nanocomposite mit hoher I.V. umfassend:
ein Matrixpolyamid mit hohem Molekulargewicht, das durch Kondensationspolymerisation von Disäuren und Diaminen hergestellt wird, und
Plättchenteilchen, die in dem Matrixpolymer exfoliert sind, worin die Plättchenteilchen in einem Matrixpolymer-kompatiblen oligomeren Harz dispergiert sind und worin die Plättchenteilchen-Oligomerharz-Dispersion in das Matrixpolymer inkorporiert ist.

2. Das Nanocomposite gemäß Anspruch 1, worin das Matrixpolymer mit hohem Molekulargewicht Poly(m-Xylylen-Adipinsäureamid) oder ein Copolymer davon, Isophthalsäure-modifiziertes Poly(m-Xylylen-Adipinsäureamid), Nylon-6,6 oder ein Copolymer davon oder eine Mischung davon ist.

3. Das Nanocomposite gemäß Anspruch 1, worin das oligomere Harz und das Matrixpolymer mit hohem Molekulargewicht die gleichen Monomereinheiten aufweisen.

4. Das Nanocomposite gemäß Anspruch 1, worin das oligomere Harz Oligo(m-Xylylen-Adipinsäureamid) oder ein Cooligomer davon ist und das Matrixpolymer mit hohem Molekulargewicht Poly(m-Xylylen-Adipinsäureamid) oder ein Copolymer davon ist.

5. Das Nanocomposite gemäß Anspruch 1, worin das Nanocompositematerial mehr als 0 bis 25 Gew.-% Plättchenteilchen umfasst.

6. Das Nanocomposite gemäß Anspruch 1, worin die Plättchenteilchen eine Dicke von weniger als 20 nm und einen Durchmesser von 10 bis 5000nm aufweisen.

7. Das Nanocomposite gemäß Anspruch 1, worin die Plättchenteilchen von organischem oder anorganischem Tonmaterial abgeleitet sind.

8. Das Nanocomposite gemäß Anspruch 7, worin das Tonmaterial ein natürliches, synthetisches oder modifiziertes Phyllosilicat ist.

9. Das Nanocomposite gemäß Anspruch 1 mit einer I.V. von wenigstens 0,9 dL/g, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

10. Ein Gegenstand, hergestellt aus dem Nanocomposite gemäß Anspruch 1.

11. Der Gegenstand gemäß Anspruch 10 in Form eines Films, einer Faser, einer Folie, eines extrudierten Gegenstands, eines Formgegenstands oder eines Formbehälters.

12. Der Gegenstand gemäß Anspruch 10 in Form einer Flasche.

13. Der Gegenstand gemäß Anspruch 10, der eine Gaspermeabilität aufweist, die wenigstens 15 % niedriger als jene von unmodifiziertem Polymer ist.

14. Ein Gegenstand mit einer Vielzahl von Schichten, worin wenigstens eine Schicht aus dem Nanocomposite gemäß Anspruch 1 gebildet ist.

15. Der Gegenstand gemäß Anspruch 14, worin das Nanocomposite zwischen zwei anderen Schichten angeordnet ist.

16. Der Gegenstand gemäß Anspruch 14 mit fünf Schichten umfassend:
(a) eine erste und eine fünfte Schicht umfassend Polyethylenterephthalat oder ein Copolymer davon,
(b) eine dritte Schicht umfassend recycliertes Polyethylenterephthalat oder ein Copolymer davon, und
(c) eine zweite und vierte Schicht, die aus dem Nanocomposite gebildet sind.

17. Der Gegenstand gemäß Anspruch 16, worin wenigstens eine Schicht zusätzlich eine weitere Verbindung umfasst, die aus der Gruppe ausgewählt ist, welche aus Farbstoffen, Pigmenten, Russ, Glasfasern, schlagzähmachenden Zusatzstoffen, Antioxidationsmitteln, Oberflächenschmiermitteln, Denesting-Mitteln, UV-Licht-Absorptionsmitteln, Metalldeaktivierungsmitteln, Füllstoffen, Nukleirungsmitteln, Stabilisatoren, Flammschutzverzögerungsrnittein, Wiedererwärmungshilfsstoffen, Kristallisationshilfsstoffen, acetaldehydreduzierenden Verbindungen, Recyclingtrennmitteln, Sauerstofffänger-Materialien und Mischungen davon besteht.

18. Das Nanocomposite gemäß Anspruch 1, worin wenigstens 75 % der Plättchenteilchen in Form von individuellen Plättchen und Aggregaten in dem Nanocompositematerial dispergiert sind.

19. Das Nanocomposite gemäß Anspruch 18 mit einer I.V. von wenigstens 0,9 dL/g, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

20. Ein Gegenstand, hergestellt aus dem Nanocomposite gemäß Anspruch 18.

21. Der Gegenstand gemäß Anspruch 20 in Form eines Films, einer Faser, einer Folie, eines extrudierten Gegenstands, eines Formgegenstands oder eines Formbehälters.

22. Der Gegenstand gemäß Anspruch 20 in Form einer Flasche.

23. Der Gegenstand gemäß Anspruch 20, der eine Gaspermeabilität aufweist, die wenigstens 15 % niedriger als jene von unmodifiziertem Polymer ist.

24. Ein Verfahren zur Herstellung eines exfolierten Polymer-Plättchenteilchen-Nanocomposites mit hoher I.V., umfassend die folgenden Schritte:
(i) Schmelzmischen von Plättchenteilchen mit einem Matrixpolymer-kompatiblen oligomeren Harz, um ein oligomeres Harz-Plättchenteilchen-Composite zu bilden, und
(ii) Mischen des oligomeren Harz-Plättchenteilchen-Composites mit einem Matrixpolyamid mit hohem Molekulargewicht, das durch Kondensationspolymerisation von Disäuren und Diaminen hergestellt wird, wodurch ein exfoliertes Polymer-Nanocompositematerial mit hoher I.V. produziert wird.

25. Das Verfahren gemäß Anspruch 24, worin der Schritt (i) mittels einem Chargenmischen oder einem Compoundierextrusionsverfahren durchgeführt wird.

26. Das Verfahren gemäß Anspruch 24, worin der Schritt (i) wie folgt durchgeführt wird:
(a) Trockenvermischen des oligomeren Harzes mit Plättchenteilchen vor dem Schmelzvermischen, wodurch eine trockene Mischung gebildet wird, und
(b) Schmelzvermischen der trockenen Mischung durch einen Compoundierextruder, um das oligomere Harz-Plättchenteilchen-Composite zu bilden.

27. Das Verfahren gemäß Anspruch 24, worin der Schritt (i) wie folgt durchgeführt wird:
(a) Einführen des oligomeren Harzes und der Plättchenteilchen getrennt voneinander in einen Compoundierextruder, und
(b) Schmelzmischen des oligomeren Harzes und der Plättchenteilchen durch den Compoundierextruder, um das oligomere Harz-Plättchenteilchen-Composite zu bilden.

28. Das Verfahren gemäß Anspruch 24, worin der Schritt (i) wie folgt durchgeführt wird:
(a) Einführen des oligomeren Harzes in einen Compoundierextruder,
(b) Einführen der Plättchenteilchen in den Compoundierextruder nach dem oligomeren Harz, und
(c) Schmelzmischen des oligomeren Harzes und der Plättchenteilchen durch den Compoundierextruder, um das oligomere Harz-Plättchenteilchen-Composite zu bilden.

29. Das Verfahren gemäß Anspruch 24, worin der Schritt (i) durchgeführt wird mittels Schmelzvermischen des oligomeren Harzes mit den Plättchenteilchen in einem Reaktor, um das oligomere Harz-Plättchenteilchen-Composite zu bilden, vor dem Einführen der Schmelzmischung in einen Compoundierextruder.

30. Das Verfahren gemäß Anspruch 24, worin der Schritt (i) wie folgt durchgeführt wird:
(a) Schmelzen des oligomeren Harzes, um geschmolzenes oligomeres Harz zu bilden, und
(b) Schmelzmischen des Oligomerharzes und der Plättchenteilchen durch einen Compoundierextruder, um das oligomere Harz-Plättchenteilchen-Composite zu bilden.

31. Das Verfahren gemäß Anspruch 24, worin der Schritt (ii) durch Schmelzcompoundieren des oligomeren Harz-Plättchenteilchen-Composites mit dem Matrixpolyamid mit hohem Molekulargewicht durchgeführt wird.

32. Das Verfahren gemäß Anspruch 24, worin das Matrixpolyamid mit hohem Molekulargewicht ein gewichtsmittleres Molekulargewicht von mehr als 20.000 g/Mol aufweist.

33. Das Verfahren gemäß Anspruch 24, worin das Matrixpolyamid mit hohem Molekulargewicht eine I.V. von wenigstens 0,7 dL/g aufweist, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

34. Das Verfahren gemäß Anspruch 33, worin das Polyamid Poly(m-Xylylen-Adipinsäureamid) oder ein Copolymer davon, Isophthalsäure-modifiziertes Poly(m-Xylylen-Adipinsäureamid), Nylon-6,6 oder ein Copolymer davon oder eine Mischung davon ist.

35. Das Verfahren gemäß Anspruch 24, worin das oligomere Harz und das Matrixpolymer mit hohem Molekulargewicht die gleichen Monomereinheiten aufweisen.

36. Das Verfahren gemäß Anspruch 24, worin das oligomere Harz Oligo(m-Xylylen-Adipinsäureamid) oder ein Cooligomer davon ist und das Matrixpolymer mit hohem Molekulargewicht Poly(m-Xylylen-Adipinsäureamid) oder ein Copolymer davon ist.

37. Das Verfahren gemäß Anspruch 24, worin das-oligomere Harz ein oligomerer Polyester ist.

38. Das Verfahren gemäß Anspruch 24, worin das oligomere Harz ein oligomeres Polyamid ist.

39. Das Verfahren gemäß Anspruch 24, worin das oligomere Harz ein Homooligomer oder ein Cooligomer ist.

40. Das Verfahren gemäß Anspruch 24, worin das oligomere Harz eine I.V. von 0,1 dL/g bis 0,5 dL/g aufweist, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

41. Das Verfahren gemäß Anspruch 24, worin das oligomere Harz ein zahlenmittleres Molekulargewicht von 200 bis 10.000 g/Mol aufweist.

42. Das Verfahren gemäß Anspruch 24, worin das Nanocompositematerial mehr als 0 bis 25 Gew.-% Plättchenteilchen umfasst.

43. Das Verfahren gemäß Anspruch 24, worin das Nanocompositematerial von 0,1 bis 15 Gew.-% Plättchenteilchen umfasst.

44. Das Verfahren gemäß Anspruch 24, worin das Nanocompositematerial von 0,5 bis 10 Gew.-% Plättchenteilchen umfasst.

45. Das Verfahren gemäß Anspruch 24, worin wenigstens 75 % der Plättchenteilchen in Form von individuellen Plättchen und Aggregaten in dem Nanocompositematerial dispergiert sind.

46. Das Verfahren gemäß Anspruch 24, worin die Plättchenteilchen eine Dicke von weniger als 20 nm und einen Durchmesser von 10 bis 5000 nm aufweisen.

47. Das Verfahren gemäß Anspruch 24, worin die Plättchenteilchen von organischem oder anorganischem Schichttonmaterial abgeleitet sind.

48. Das Verfahren gemäß Anspruch 47, worin das Tonmaterial in Form von Pellets, Plättchen, Splittern, Pulver oder einer Mischung davon vorliegt.

49. Das Verfahren gemäß Anspruch 47, worin das Tonmaterial ein natürliches, synthetisches oder modifiziertes Phyllosilicat ist.

50. Das Verfahren gemäß Anspruch 49, worin das Phyllosilicat für Smektit, Natriummontmorillonit, Natriumhektorit, Bentonit, Nontronit, Beidelit, Volonsloit, Saponit, Sauconit, Magadit, Kenyait oder synthetisches Natriumhektorit oder eine Mischung davon steht.

51. Das Verfahren gemäß Anspruch 24, worin die Plättchenteilchen mit einem wasserlöslichen oder wasserunlöslichen Polymer, einem organischen Reagenz oder Monomer, einer Silanverbindung, einem Metall, einem Organometall oder einem organischen Kation oder einer Mischung davon behandelt werden, um einen Kationenaustausch durchzuführen.

52. Das Verfahren gemäß Anspruch 51, worin das organische Kation kein organisches Kationsalz ist, das durch die folgende Formel (I) dargestellt wird: 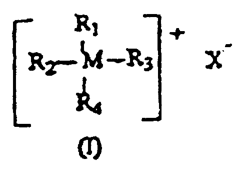 worin M für Stickstoff oder Phosphor steht, X⁻ für ein Halogenid, Hydroxid oder Acetatanion steht, R₁ für eine gerade oder verzweigte Alkylgruppe mit wenigstens 8 Kohlenstoffatomen steht, und R₂, R₃ und R₄ unabhängig voneinander für Wasserstoff oder eine gerade oder verzweigte Alkylgruppe mit 1 bis 4 Kohlenstoffatomen stehen.

53. Das Verfahren gemäß Anspruch 24, worin die Plättchenteilchen von einem Tonmaterial abgeleitet sind, das ein fließfähiges Pulver mit einer Kationenaustauschkapazität von 0,3 bis 3 meq/g ist.

54. Das Verfahren gemäß Anspruch 53, worin die Kationenaustauschkapazität von 0,8 bis 1,5 meq/g ist.

55. Ein Nanocompositematerial, das nach dem Verfahren gemäß Anspruch 24 hergestellt ist.

56. Ein Gegenstand, der aus dem Nanocompositematerial gemäß Anspruch 55 hergestellt ist.

57. Der Gegenstand gemäß Anspruch 56 in Form eines Films, einer Folie, einer Faser, eines extrudierten Gegenstands, eines Formgegenstands oder eines Formbehälters.

58. Der Gegenstand gemäß Anspruch 56 in Form einer Flasche.

59. Der Gegenstand gemäß Anspruch 56, der eine Gaspermeabilität aufweist, die wenigstens 15 % niedriger als jene von unmodifiziertem Polymer ist.

60. Ein Verfahren zur Herstellung eines exfolierten Polymer-Plättchenteilchen-Nanocomposites mit hoher I.V. umfassend:
Schmelzmischen von Plättchenteilchen, einem Matrixpolymer-kompatiblen oligomeren Harz und einem Matrixpolyamid mit hohem Molekulargewicht, das durch Kondensationspolymerisation von Disäuren und Diaminen hergestellt worden ist, wodurch ein exfoliertes Polymer-Nanocompositematerial mit hoher I.V. hergestellt wird.

61. Das Verfahren gemäß Anspruch 60, worin das Matrixpolyamid mit hohem Molekulargewicht ein gewichtsmittleres Molekulargewicht von mehr als 20.000 g/Mol aufweist.

62. Das Verfahren gemäß Anspruch 60, worin das Matrixpolyamid Poly(m-Xylylen-Adipinsäureamid) oder ein Copolymer davon, Isophthalsäure-modifiziertes Poly(m-Xylylen-Adipinsäureamid), Nylon-6,6 oder ein Copolymer davon oder eine Mischung davon ist.

63. Das Verfahren gemäß Anspruch 60, worin das oligomere Harz und das Matrixpolymer mit hohem Molekulargewicht die gleichen Monomereinheiten aufweisen.

64. Das Verfahren gemäß Anspruch 60, worin das oligomere Harz Oligo(m-Xylylen-Adipinsäureamid) oder ein Cooligomer davon ist und das Matrixpolyamid mit hohem Molekulargewicht Poly(m-Xylylen-Adipinsäureamid) oder ein Copolymer davon ist.

65. Das Verfahren gemäß Anspruch 60, worin das oligomere Harz ein Homooligomer oder ein Cooligomer ist.

66. Das Verfahren gemäß Anspruch 60, worin das oligomere Harz eine I.V. von 0,1 dL/g bis 0,5 dL/g aufweist, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

67. Das Verfahren gemäß Anspruch 60, worin das Nanocompositematerial mehr als 0 bis 25 Gew.-% Plättchenteilchen umfasst.

68. Das Verfahren gemäß Anspruch 60, worin wenigstens 75 % der Plättchenteilchen in Form von individuellen Plättchen und Aggregaten in dem Nanocompositematerial dispergiert sind.

69. Das Verfahren gemäß Anspruch 60, worin die Plättchenteilchen von organischem oder anorganischem Schichttonmaterial abgeleitet sind.

70. Das Verfahren gemäß Anspruch 60, worin die Plättchenteilchen mit einem wasserlöslichen oder wasserunlöslichen Polymer, einem organischen Reagenz oder Monomer, einer Silanverbindung, einem Metall, einem Organometall oder einem organischen Kation oder einer Mischung davon behandelt werden, um einen Kationenaustausch durchzuführen.

71. Das Verfahren gemäß Anspruch 70, worin das organische Kation kein organisches Kationsalz ist, das durch die folgende Formel (I) dargestellt wird: 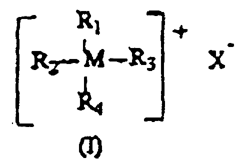 worin M für Stickstoff oder Phosphor steht, X⁻ für ein Halogenid, Hydroxid oder Acetatanion steht, R₁ für eine gerade oder verzweigte Alkylgruppe mit wenigstens 8 Kohlenstoffatomen steht, und R₂, R₃ und R₄ unabhängig voneinander für Wasserstoff oder eine gerade oder verzweigte Alkylgruppe mit 1 bis 4 Kohlenstoffatomen stehen.

72. Ein Nanocompositematerial, das nach dem Verfahren gemäß Anspruch 60 hergestellt ist.

73. Ein Gegenstand, der aus dem Nanocompositematerial gemäß Anspruch 72 hergestellt ist.

74. Der Gegenstand gemäß Anspruch 73 in Form eines Films, einer Folie, einer Faser, eines extrudierten Gegenstands, eines Formgegenstands oder eines Formbehälters.

75. Der Gegenstand gemäß Anspruch 73 in Form einer Flasche.

76. Der Gegenstand gemäß Anspruch 73, der eine Gaspermeabilität aufweist, die wenigstens 15 % niedriger als jene von unmodifiziertem Polymer ist.

77. Ein Verfahren zur Herstellung eines exfolierten Polymer-Plättchenteilchen-Nanocomposites mit hoher I.V. umfassend die folgenden Schritte:
(i) Schmelzvermischen von Plättchenteilchen mit einem oligomeren Polyamidharz, das durch Kondensationspolymerisation von Disäuren und Diaminen hergestellt worden ist, zur Bildung eines oligomeren Polyamidharz-Plättchenteilchen-Composites, und
(ii) Erhöhen des Molekulargewichts des oligomeren Polyamidharz-Plättchenteilchen-Composites durch reaktive Kettenverlängerung des oligomeren Polyamidharzes, um ein exfoliertes Nanocompositematerial mit hoher I.V. herzustellen.

78. Das Verfahren gemäß Anspruch 77, worin das oligomere Polyamidharz ein oligomeres Polyamid ist.

79. Das Verfahren gemäß Anspruch 77, worin das oligomere Polyamidharz eine I.V. von 0,1 dL/g bis 0,5 dL/g aufweist, gemessen in einer Mischung von 60 Gew.-% Phenol und 40 Gew.-% 1,1,2,2-Tetrachlorethan bei einer Konzentration von 0,5 g/100 ml (Lösungsmittel) bei 25°C.

80. Das Verfahren gemäß Anspruch 77, worin die Plättchenteilchen mit einem wasserlöslichen oder wasserunlöslichen Polymer, einem organischen Reagenz oder Monomer, einer Silanverbindung, einem Metall, einem Organometall oder einem organischen Kation oder einer Mischung davon behandelt werden, um einen Kationenaustausch durchzuführen.

81. Das Verfahren gemäß Anspruch 80, worin das organische Kation kein organisches Kationsalz ist, das durch die folgende Formel (I) dargestellt wird: 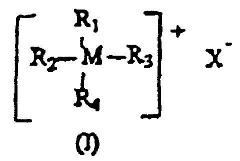 worin M für Stickstoff oder Phosphor steht, X⁻ für ein Halogenid, Hydroxid oder Acetatanion steht, R₁ für eine gerade oder verzweigte Alkylgruppe mit wenigstens 8 Kohlenstoffatomen steht, und R₂, R₃ und R₄ unabhängig voneinander für Wasserstoff oder eine gerade oder verzweigte Alkylgruppe mit 1 bis 4 Kohlenstoffatomen stehen.

82. Ein Nanocompositematerial, das nach dem Verfahren gemäß Anspruch 77 hergestellt ist.

83. Ein Gegenstand, der aus dem Nanocompositematerial gemäß Anspruch 82 hergestellt ist.

84. Der Gegenstand gemäß Anspruch 83 in Form eines Films, einer Folie, einer Faser, eines extrudierten Gegenstands, eines Formgegenstands oder eines Formbehälters.

85. Der Gegenstand gemäß Anspruch 83 in Form einer Flasche.

86. Ein Verfahren zur Herstellung eines exfolierten Polymer-Plättchenteilchen-Nanocomposites mit hoher I.V. umfassend die folgenden Schritte:
(i) Inkontaktbringen eines Tons mit einem organischen Kation, um einen Organoton zu bilden, der Plättchenteilchen umfasst,
(ii) Schmelzmischen des Organotons mit einem Matrixpolymer-kompatiblen oligomeren Harz, um ein oligomeres Harz-Plättchenteilchen-Composite zu bilden, und
(iii) Mischen des oligomeren Harz-Plättchenteilchen-Composites mit einem Matrixpolyamid mit hohem Molekulargewicht, das durch Kondensationspolymerisation von Disäuren und Diaminen hergestellt worden ist, wodurch ein exfoliertes Polymer-Nanocompositematerial mit hoher I.V. hergestellt wird.

87. Das Verfahren gemäß Anspruch 86, worin der Schritt (ii) mittels einem Chargenmischen oder einem Compoundierextrusionsverfahren durchgeführt wird.

88. Das Verfahren gemäß Anspruch 86, worin der Schritt (iii) durch Schmelzcompoundieren des oligomeren Harz-Plättchenteilchen-Composites mit dem Matrixpolyamid mit hohem Molekulargewicht durchgeführt wird.

89. Das Verfahren gemäß Anspruch 86, worin das organische Kation kein organisches Kationsalz ist, das durch die folgende Formel (I) dargestellt wird: 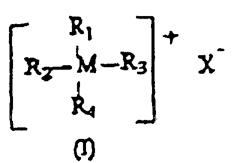 worin M für Stickstoff oder Phosphor steht, X⁻ für ein Halogenid, Hydroxid oder Acetatanion steht, R₁ für eine gerade oder verzweigte Alkylgruppe mit wenigstens 8 Kohlenstoffatomen steht, und R₂, R₃ und R₄ unabhängig voneinander für Wasserstoff oder eine gerade oder verzweigte Alkylgruppe mit 1 bis 4 Kohlenstoffatomen stehen.

## Revendications

1. Nanocomposite Polymère-particules plaquettaire à haute I.V., exfolié, comprenant :
un polyamide de matrice de haute masse moléculaire préparé par polymérisation par condensation de diacides et de diamines, et
des particules plaquettaires exfoliées dans le polymère de matrice, où les particules plaquettaires sont dispersées dans une résine oligomère compatible avec le polymère de matrice et où la dispersion particules plaquettaires-résine d'oligomère est incorporée dans le polymère de matrice.

2. Nanocomposite selon la revendication 1 où le polymère de matrice de haute masse moléculaire est le poly(m-xylylène adipamide) ou un copolymère de celui-ci, le poly(m-xylylène adipamide) modifié avec l'acide isophtalique, le Nylon 6,6, ou un copolymère de ceux-ci, ou un mélange de ceux-ci.

3. Nanocomposite selon la revendication 1 où la résine d'oligomère et le polymère de matrice de haute masse moléculaire ont les mêmes unités monomères.

4. Nanocomposite selon la revendication 1 où la résine oligomère est un oligo(m-xylylène adipamide), ou un cooligomère de celui-ci, et le polymère de matrice de haute masse moléculaire est le poly(m-xylylène adipamide), ou un copolymère de celui-ci.

5. Nanocomposite selon la revendication 1 où le matériau nanocomposite comprend plus de 0 à 25 % en masse de particules plaquettaires.

6. Nanocomposite selon la revendication 1 où les particules plaquettaires ont une épaisseur inférieure à 20 nm et un diamètre de 10 à 5000nm.

7. Nanocomposite selon la revendication 1 où les particules plaquettaires sont dérivées d'un matériau argileux organique ou inorganique.

8. Nanocomposite selon la revendication 7 où le matériau argileux est un phyllosilicate naturel, synthétique ou modifié.

9. Nanocomposite selon la revendication 1 ayant une V.I. d'au moins 0,9 dL/g telle qu'elle est mesurée dans un mélange de 60 % en masse de phénol et 40 % en masse de 1,1,2,2-tétrachloroéthane à une concentration de 0,5 g/100 ml (solvant) à 25°C.

10. Article préparé à partir du nanocomposite selon la revendication 1.

11. Article selon la revendication 10 sous forme de film, de fibre, de feuille, d'un article extrudé, d'un article moulé ou d'un récipient moulé.

12. Article selon la revendication 10 sous forme d'une bouteille.

13. Article selon la revendication 10 ayant une perméabilité aux gaz qui est inférieure d'au moins 15 % à celle d'un polymère non modifié.

14. Article ayant une pluralité de couches où au moins une couche est formée à partir du nanocomposite selon la revendication 1.

15. Article selon la revendication 14 où le nanocomposite est disposé de manière intermédiaire à deux autres couches.

16. Article selon la revendication 14 ayant cinq couches comprenant :
(a) une première et une cinquième couche comprenant du poly(éthylène téréphtalate) ou un copolymère de celui-ci,
(b) une troisième couche comprenant du poly(éthylène téréphtalate) recyclé ou un copolymère de celui-ci, et
(c) une seconde et une quatrième couche formées à partir du nanocomposite.

17. Article selon la revendication 16 où au moins une couche comprend en outre un composé supplémentaire choisi dans le groupe consistant en les colorants, les pigments, le noir de carbone, les fibres de verre, les modificateurs de choc, les antioxydants, les lubrifiants de surface, les agents de désemboîtement, les agents absorbant la lumière UV, les désactivateurs de métaux, les charges, les agents de nudéation, les stabilisants, les ignifugeants, les adjuvants de réchauffage, les adjuvants de cristallisation, les composés réduisant l'acétaldéhyde, les adjuvants de séparation et de recyclage, les matériaux piégeant l'oxygène, et leurs mélanges.

18. Nanocomposite selon la revendication 1 où au moins 75 % des particules plaquettaires sont dispersées sous forme de plaquettes individuelles et d'agrégats individuels dans le matériau nanocomposite.

19. Nanocomposite selon la revendication 18 ayant une V.I. d'au moins 0,9 dL/g telle qu'elle est mesurée dans un mélange de 60 % en masse de phénol et 40 % en masse de 1,1,2,2-tétrachtoroéthane à une concentration de 0,5 g/100 ml (solvant) à 25°C.

20. Article préparé à partir du nanocomposite selon la revendication 18.

21. Article selon la revendication 20 sous forme de film, de fibre, de feuille, d'un article extrudé, ou d'un article moulé, ou d'un récipient moulé.

22. Article selon la revendication 20 sous forme d'une bouteille.

23. Article selon la revendication 20 ayant une perméabilité aux gaz qui est inférieure d'au moins 15 % à celle d'un polymère non modifié.

24. Procédé pour préparer un nanocomposite polymère-particules plaquettaires à haute V.I., exfolié, comprenant les étapes de :
(i) mélanger à l'état fondu des particules plaquettaires avec une résine oligomère compatible avec le polymère de matrice pour former un composite résine oligomère-particules plaquettaires, et
(ii) mélanger le composite résine oligomère-particules plaquettaires avec un polyamide de matrice de haute masse moléculaire préparé par polymérisation par condensation de diacides et de diamines, pour produire un matériau composite à polymère de haute V.I. exfolié.

25. Procédé selon la revendication 24 où l'étape (i) est réalisée par un procédé de mélange discontinu ou d'extrusion de compoundage à l'état fondu.

26. Procédé selon la revendication 24 où l'étape (i) est réalisée par
(a) mélange à sec de la résine oligomère avec des particules plaquettaires avant le mélange à l'état fondu, pour former un mélange sec, et
(b) mélange à l'état fondu du mélange sec au moyen d'une extrudeuse de compoundage pour former le composite résine oligomère-particules plaquettaires.

27. Procédé selon la revendication 24 où l'étape (i) est réalisée par
(a) introduction de la résine oligomère et des particules plaquettaires séparément dans une extrudeuse de compoundage, et
(b) mélanger à l'état fondu la résine oligomère et les particules plaquettaires dans l'extrudeuse de compoundage pour former le composite résine oligomère-particules plaquettaires.

28. Procédé selon la revendication 24 où l'étape (i) est réalisée par
(a) introduction de la résine oligomère dans une extrudeuse de compoundage,
(b) introduction des particules plaquettaires dans l'extrudeuse de compoundage après la résine oligomère, et
(c) mélange à l'état fondu de la résine oligomère et des particules plaquettaires dans l'extrudeuse de compoundage pour former le composite résine oligomère-particules plaquettaires.

29. Procédé selon la revendication 24 où l'étape (i) est réalisée par mélange à l'état fondu de la résine oligomère avec les,particules plaquettaires dans un réacteur pour former le composite résine oligomère-particules plaquettaires avant d'introduire le mélange fondu dans une extrudeuse de compoundage.

30. Procédé selon la revendication 24 où l'étape (i) est réalisée par
(a) fusion de la résine oligomère pour former une résine oligomère fondue, et
(b) mélange à l'état fondu de la résine oligomère fondue et des particules plaquettaires dans une extrudeuse de compoundage pour former le composite résine oligomère-particules plaquettaires.

31. Procédé selon la revendication 24 où l'étape (ii) est réalisée par compoundage à l'état fondu du composite résine oligomère-particules plaquettaires avec le polyamide de matrice de haute masse moléculaire.

32. Procédé selon la revendication 24 où le polyamide de matrice de haute masse moléculaire a une masse moléculaire moyenne en poids supérieure à 20 000 g/mol.

33. Procédé selon la revendication 24 où le polyamide de matrice de haute masse moléculaire a une V.I. d'au moins 0,7 dL/g telle qu'elle est mesurée dans un mélange de 60 % en masse de phénol et 40 % en masse de 1,1,2,2-tétrachloroéthane à une concentration de 0,5 g/100 ml (solvant) à 25°C.

34. Procédé selon la revendication 33 où le polyamide est le poly(m-xylylène adipamide) ou un copolymère de celui-ci, le poly(m-xylylène adipamide) modifié avec l'acide isophtalique, le Nylon-6,6, ou un copolymère de ceux-ci, ou un mélange de ceux-ci.

35. Procédé selon la revendication 24 où la résine oligomère et le polymère de matrice de haute masse moléculaire ont les mêmes unités monomères.

36. Procédé selon la revendication 24 où la résine oligomère est un oligo(m-xylylène adipamide), ou un cooligomère de celui-ci, et le polymère de matrice de haute masse moléculaire est le poly(m-xylylène adipamide), ou un copolymère de celui-ci.

37. Procédé selon la revendication 24 où la résine oligomère est un polyester oligomère.

38. Procédé selon la revendication 24 où la résine oligomère est un polyamide oligomère.

39. Procédé selon la revendication 24 où la résine oligomère est un homooligomère ou un cooligomère.

40. Procédé selon la revendication 24 où la résine oligomère a une V.I. de 0,1 dL/g à 0,5 dL/g telle qu'elle est mesurée dans un mélange de 60 % en masse de phénol et 40 % en masse de 1,1,2,2-tétrachloroéthane à une concentration de 0,5 g/100 ml (solvant) à 25°C.

41. Procédé selon la revendication 24 où la résine oligomère a une masse moléculaire moyenne en nombre de 200 à 10 000 g/mol.

42. Procédé selon la revendication 24 où le matériau nanocomposite comprend plus de 0 à 25 % en masse de particules plaquettaires.

43. Procédé selon la revendication 24 où le matériau nanocomposite comprend de 0,1 à 15 % en masse de particules plaquettaires.

44. Procédé selon la revendication 24, où le matériau nanocomposite comprend de 0,5 à 10 % en masse de particules plaquettaires.

45. Procédé selon la revendication 24 où au moins 75 % des particules plaquettaires sont dispersées sous forme de plaquettes individuelles et d'agrégats individuels dans le matériau nanocomposite.

46. Procédé selon la revendication 24 où les particules plaquettaires ont une épaisseur inférieure à 20 nm et un diamètre de 10 à 5 000 nm.

47. Procédé selon la revendication 24 où les particules plaquettaires sont dérivées d'un matériau argileux feuilleté organique ou inorganique.

48. Procédé selon la revendication 47 où le matériau argileux est sous forme de boulettes, d'écailles, d'éclats, de poudre, ou d'un mélange de ceux-ci.

49. Procédé selon la revendication 47 où le matériau argileux est un phyllosilicate naturel, synthétique ou modifié.

50. Procédé selon la revendication 49 où le phyllosilicate est la smectite, la montmorillonite sodique, l'hectorite sodique, la bentonite, la nontronite, la beidélite, la volonsloite, la saponite, la sauconite, la magadite, la kényaite ou l'hectorite sodique synthétique ou un mélange de celles-ci.

51. Procédé selon la revendication 24 où les particules plaquettaires sont traitées avec un polymère soluble ou insoluble dans l'eau, un réactif organique ou un monomère, un composé silane, un métal, un organométallique, ou un cation organique, pour réaliser un échange de cations ou une combinaison de ceux-ci.

52. Procédé selon la revendication 51 où le cation organique n'est pas un sel à cation organique représenté par la formule (I) : 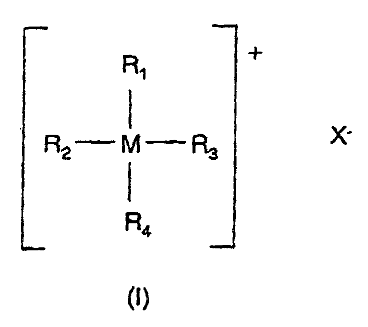 où M est l'azote ou le phosphore, X⁻ est un anion halogénure, hydroxyde ou acétate, R₁ est un groupe alkyle linéaire ou ramifié ayant au moins 8 atomes de carbone, et R₂, R₃ et R₄ sont indépendamment l'hydrogène ou un groupe alkyle linéaire ou ramifié ayant 1 à 4 atomes de carbone.

53. Procédé selon la revendication 24 où les particules plaquettaires sont dérivées d'un matériau argileux qui est une poudre fluide ayant une capacité d'échange de cations de 0,3 à 3 meq/g.

54. Procédé selon la revendication 53 où la capacité d'échange de cations est de 0,8 à 1,5 meq/g.

55. Matériau nanocomposite produit par le procédé selon la revendication 24.

56. Article préparé à partir du matériau nanocomposite selon la revendication 55.

57. Article selon la revendication 56 sous forme de film, de feuille, de fibre, d'un article extrudé, d'un article moulé ou d'un récipient moulé.

58. Article selon la revendication 56 sous forme d'une bouteille.

59. Article selon la revendication 56 ayant une perméabilité aux gaz qui est inférieure d'au moins 15 % à celle d'un polymère non modifié.

60. Procédé pour préparer un nanocomposite polymère-particules plaquettaires à haute V.I. exfolié comprenant :
le mélange à l'état fondu de particules plaquettaires, d'une résine oligomère compatible avec le polymère de matrice et d'un polymère de matrice de haute masse moléculaire préparée par polymérisation par condensation de diacides et de diamines, pour produire un matériau nanocomposite à polymère à haute V.I. exfolié.

61. Procédé selon la revendication 60 où le polyamide de matrice de haute masse moléculaire a une masse moléculaire moyenne en poids supérieure à 20 000 g/mol.

62. Procédé selon la revendication 60 où le polyamide de matrice est le poly(m-xylylène adipamide) ou un copolymère de celui-ci, le poly(m-xylylène adipamide) modifié avec l'acide isophtalique, le Nylon-6,6, ou un copolymère de ceux-ci, ou un mélange de ceux-ci.

63. Procédé selon la revendication 60 où la résine oligomère et le polyamide de matrice de haute masse moléculaire ont les mêmes unités monomères.

64. Procédé selon la revendication 60 où la résine oligomère est un oligo(m-xylylène adipamide), ou un cooligomère de celui-ci, et le polyamide de matrice de haute masse moléculaire est le poly(m-xylylène adipamide), ou un copolymère de celui-ci.

65. Procédé selon la revendication 60 où la résine oligomère est un homo-oligomère ou un co-oligomère.

66. Procédé selon la revendication 60 où la résine oligomère a une V.I. de 0,1 dL/g à 0,5 dL/g telle qu'elle est mesurée dans un mélange de 60 % en masse de phénol et 40 % en masse de 1,1,2,2-tétrachloroéthane à une concentration de 0,5 g/100 ml (solvant) à 25°C.

67. Procédé selon la revendication 60 où le matériau nanocomposite comprend plus de 0 à 25 % en masse de particules plaquettaires.

68. Procédé selon la revendication 60 où au moins 75 % des particules plaquettaires sont dispersées sous forme de plaquettes individuelles et d'agrégats individuels dans le matériau nanocomposite.

69. Procédé selon la revendication 60 où les particules plaquettaires sont dérivées d'un matériau argileux feuilleté organique ou inorganique.

70. Procédé selon la revendication 60 où les particules plaquettaires sont traitées avec un polymère soluble ou insoluble dans l'eau, un réactif organique ou un monomère, un composé silane, un métal, un organométallique, ou un cation organique, pour réaliser un échange de cations, ou une combinaison de ceux-ci.

71. Procédé selon la revendication 70 où le cation organique n'est pas un sel à cation organique représenté par la formule (I) : 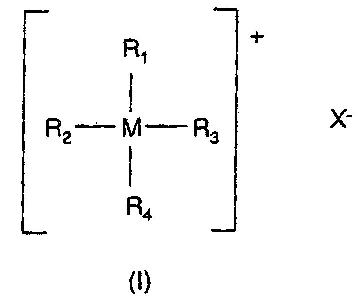 où M est l'azote ou le phosphore, X- est un anion halogénure, hydroxyde ou acétate, R₁ est un groupe alkyle linéaire ou ramifié ayant au moins 8 atomes de carbone, et R₂, R₃ et R₄ sont indépendamment l'hydrogène ou un groupe alkyle linéaire ou ramifié ayant 1 à 4 atomes de carbone.

72. Matériau nanocomposite produit par le procédé selon la revendication 60.

73. Article préparé à partir du matériau nanocomposite selon la revendication 72.

74. Article selon la revendication 73 sous forme de film, de feuille, de fibre, d'un article extrudé, d'un article moulé ou d'un récipient moulé.

75. Article selon la revendication 73 sous forme d'une bouteille.

76. Article selon la revendication 73 ayant une perméabilité aux gaz qui est inférieure d'au moins 15 % à celle d'un polymère non modifié.

77. Procédé pour préparer un nanocomposite polymère-particules plaquettaires à haute V.I. exfolié comprenant les étapes de :
(i) mélanger à l'état fondu des particules plaquettaires avec une résine de polyamide oligomère préparée par polymérisation par condensation de diacides et de diamines pour former un composite résine de polyamide oligomère-patticules plaquettaires, et
(ii) augmenter la masse moléculaire du composite résine de polyamide oligomère-particules plaquettaires par une extension de chaîne réactive de la résine de polyamide oligomère pour produire un matériau nanocomposite à haute V.I. exfolié.

78. Procédé selon la revendication 77 où la résine de polyamide oligomère est un polyamide oligomère.

79. Procédé selon la revendication 77 où la résine de polyamide oligomère a une V.I. de 0,1 dL/g à 0,5 dL/g telle qu'elle est mesurée dans un mélange de 60 % en masse de phénol et de 40 % en masse de 1,1,2,2-tétrachloroéthane à une concentration de 0,5 g/100 ml (solvant) à 25°C.

80. Procédé selon la revendication 77 où les particules plaquettaires sont traitées avec un polymère soluble ou insoluble dans l'eau, un réactif organique ou un monomère, un composé silane, un métal, un organométallique, ou un cation organique, pour réaliser un échange de cations, ou une combinaison de ceux-ci.

81. Procédé selon la revendication 80 où le cation organique n'est pas un sel à cation organique représenté par la formule (I) : 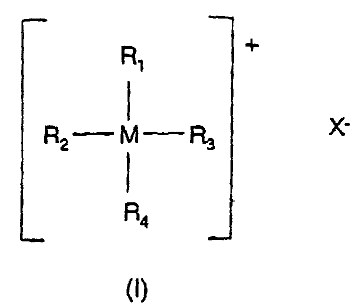 où M est l'azote ou le phosphore; X⁻ est un anion halogénure, hydroxyde ou acétate, R₁ est un groupe alkyle linéaire ou ramifié ayant au moins 8 atomes de carbone, et R₂, R₃ et R₄ sont indépendamment l'hydrogène ou un groupe alkyle linéaire ou ramifié ayant 1 à 4 atomes de carbone.

82. Matériau nanocomposite produit par le procédé selon la revendication 77.

83. Article préparé à partir du matériau nanocomposite selon la revendication 82.

84. Article selon la revendication 83 sous forme de film, de feuille, de fibre, d'un article extrudé, d'un article moulé ou d'un récipient moulé.

85. Article selon la revendication 83 sous forme d'une bouteille.

86. Procédé pour préparer un nanocomposite polymère-particules plaquettaires à haute V.I. exfolié comprenant les étapes de :
(i) mettre en contact une argile avec un cation organique pour former une organoargile comprenant des particules plaquettaires,
(ii) mélanger à l'état fondu l'organoargile avec une résine oligomère compatible avec un polymère de matrice pour former un composite résine oligomère-particules plaquettaires, et
(iii) mélanger le composite résine oligomère-particules plaquettaires avec un polyamide de matrice de haute masse moléculaire préparé par polymérisation par condensation de diacides et de diamines, pour produire un matériau nanocomposite à polymère à haute V.I. exfolié.

87. Procédé selon la revendication 86 où l'étape (ii) est réalisée par un procédé de mélange discontinu ou d'extrusion de compoundage à l'état fondu.

88. Procédé selon la revendication 86 où l'étape (ii) est réalisée par compoundage à l'état fondu du composite résine oligomère-particules plaquettaires avec le polyamide de matrice de haute masse moléculaire.

89. Procédé selon la revendication 86 où le cation organique n'est pas un sel à cation organique représenté par la formule (I) : 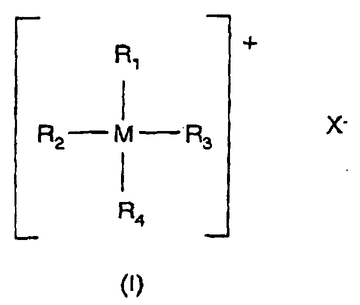 où M est l'azote ou le phosphore, X- est un anion halogénure, hydroxyde ou acétate, R₁ est un groupe alkyle linéaire ou ramifié ayant au moins 8 atomes de carbone, et R₂, R₃ et R₄ sont indépendamment l'hydrogène ou un groupe alkyle linéaire ou ramifié ayant 1 à 4 atomes de carbone.
